# EUROPÄISCHE PATENTSCHRIFT

(11) **EP 3 029 289 B1**
(45) Veröffentlichungstag und Bekanntmachung des Hinweises auf die Patenterteilung: **27.09.2017**
(21) Anmeldenummer: 15003066.6
(22) Anmeldetag: 27.10.2015
(51) Int. Cl.: F01N 3/08, F01N 3/20, F01N 9/00

(54) **ABGASNACHBEHANDLUNGSSYSTEM FÜR EIN MIT EINER BRENNKRAFTMASCHINE BETRIEBENES FAHRZEUG, INSBESONDERE FÜR EIN WASSERFAHRZEUG**
EXHAUST GAS AFTERTREATMENT SYSTEM OF A VEHICLE POWERED BY A COMBUSTION ENGINE, IN PARTICULAR FOR A SHIP
SYSTÈME DE POST-TRAITEMENT DE GAZ D'ÉCHAPPEMENT POUR UN VÉHICULE ÉQUIPÉ D'UN MOTEUR À COMBUSTION INTERNE, EN PARTICULIER POUR UN BATEAU

(30) Priorität: 03.12.2014 DE 102014017790
(43) Veröffentlichungstag der Anmeldung: 08.06.2016
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- WO-A1-2013/088850
- DE-A1-102012 019 947
- JP-A- 2011 220 280

## Beschreibung

Die Erfindung betrifft ein Abgasnachbehandlungssystem für ein mit einer Brennkraftmaschine betriebenes Fahrzeug, insbesondere für ein Wasserfahrzeug, nach dem Oberbegriff des Patentanspruches 1, ein Verfahren zum Betreiben eines Abgasnachbehandlungssystem für ein mit einer Brennkraftmaschine betriebenes Fahrzeug, insbesondere für ein Wasserfahrzeug, nach dem Oberbegriff des Patentanspruches 17 sowie ein Fahrzeug, insbesondere ein Wasserfahrzeug, mit dem Abgasnachbehandlungssystem und/oder zur Durchführung des Verfahrens nach Patentanspruch 21.

Aufgrund immer strengerer Abgasvorschriften für Fahrzeuge, insbesondere auch für Schiffe, ist es erforderlich, auch die Schwefel-Emissionen, beispielsweise Schwefeldioxid, von mit Brennkraftmaschinen betriebenen Fahrzeugen zu verringern.

In der Anlagentechnik ist es bereits bekannt, Emissionen von Brennkraftmaschinen durch die Zuführung einer wässrigen Kalziumhydroxid-Lösung oder Kalziumoxid-Lösung in das Abgas der Brennkraftmaschine zu entschwefeln. Mittels dieser Lösungen reagieren die Schwefel-Emissionen zu unschädlichem Calciumsulfat. Die Verwendung dieser Art der Entschwefelung bei Fahrzeugen ist jedoch aufgrund ihres hohen Platzbedarfs schwierig. Sofern im Abgasstrang des Fahrzeuges, in Abgas-Strömungsrichtung gesehen, stromab der Zuführung von Calciumhydroxid oder Calciumoxid zudem ein SCR-Katalysator (SCR: Selective Catalytic Reduction) zur Verringerung der Stickstoff-Emissionen des Fahrzeuges angeordnet ist, gibt es die zusätzliche Problematik, dass Calciumverbindungen auf den SCR-Katalysator treffen. Diese wirken dort als starke Katalysatorgifte, die die Lebensdauer des SCR-Katalysators deutlich verringern. Zudem können Calciumhydroxid, Calciumoxid und Calciumsülfat auch stark abrasiv wirken und so zu einem erhöhten Verschleiß an einzelnen Bauteilen des Abgasstrangs führen.

In der Anlagentechnik ist es weiterhin auch bekannt, die Emissionen der Brennkraftmaschinen durch die Zuführung von Ammoniak in das Abgas zu entschwefeln. Mittels des Ammoniaks reagieren die Schwefel-Schadstoffe zu leicht zersetzbaren Salzen, wie beispielsweise Ammoniumsulfat und Ammoniumhydrogensulfat, die dann mittels geeigneter Filter aus dem Abgas herausgefiltert werden. Diese Art der Entschwefelung erfordert jedoch eine aufwendige, insbesondere bei Fahrzeugen schwer realisierbare, Prozessführung, da sich Ammoniumsulfat bzw. Ammoniumhydrogensulfat erst bei Temperaturen unter 300 °C bildet und das Abgas der Brennkraftmaschine üblicherweise eine deutlich höhere Temperatur aufweist.

Des Weiteren sind auch bei Fahrzeugen bereits Vorrichtungen zur Entschwefelung des Abgases bekannt. Aus der DE 199 55 324 A1 geht beispielsweise eine Vorrichtung zum Reduzieren von schädlichen Bestandteilen im Abgas einer Brennkraftmaschine hervor, bei der in einer bevorzugten Ausführung eine sogenannte Schwefelfalle in einem Abgasstrang des Fahrzeuges angeordnet ist. Mittels dieser Schwefelfalle wird der Schwefelgehalt im Abgas reduziert, um die Funktion eines, in Abgas-Strömungsrichtung gesehen, stromab der Schwefelfalle in dem Abgasstrang angeordneten NOₓ-Speicherkatalysators und gegebenenfalls eines ebenfalls stromab angeordneten Partikelfilters sicherzustellen. Die Regeneration der Schwefelfalle erfolgt dabei durch Motormaßnahmen, beispielsweise durch Veränderung der Saugluftandrosselung, der Einspritzung, oder der Abgasrückführungsrate. Die Schwefelfalle ist dabei stromab eines Abgasturboladers in dem Abgasstrang angeordnet.

Aufgabe der Erfindung ist es, ein Abgasnachbehandlungssystem für ein mit einer Brennkraftmaschine betriebenes Fahrzeug, insbesondere für ein Wasserfahrzeug, und ein Verfahren zum Betreiben eines Abgasnachbehandlungssystems für ein mit einer Brennkraftmaschine betriebenes Fahrzeug, insbesondere für ein Wasserfahrzeug, bereitzustellen, mittels denen die Schwefel-Emissionen der Brennkraftmaschine auf besonders einfache und effektive Weise reduziert werden.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Abgasnachbehandlungssystem für ein mit einer Brennkraftmaschine betriebenes Fahrzeug, insbesondere für ein Wasserfahrzeug, vorgeschlagen, mit wenigstens einer in einem Abgasstrang angeordneten Turbine eines Abgasturboladers, wobei der Abgasstrang, in Abgas-Strömungsrichtung gesehen, stromauf der Turbine als Hochdruckbereich und stromab der Turbine als gegenüber dem Hochdruckbereich einem niederen Druck aufweisender Niederruckbereich ausgebildet ist, und mit wenigstens einer Speichereinrichtung, mittels der zumindest ein Teil der in dem Abgas enthaltenen, insbesondere gasförmigen, Schwefel-Schadstoffe zumindest für einen definierten Zeitraum speicherbar und/oder zwischenspeicherbar ist. Erfindungsgemäß ist, zur Speicherung und/oder wischenspeicherung der Schwefel-Schadstoffe in dem Hochdruckbereich, die wenigstens eine Speichereinrichtung stromauf der wenigstens einen Turbine in dem Abgasstrang angeordnet.

Auf diese Weise werden die Schwefel-Emissionen der Brennkraftmaschine besonders effektiv reduziert, da, sofern die Speichereinrichtung beispielsweise als ein im Folgenden noch näher erläutertes Sorptionselement ausgebildet ist, die Anordnung des Sorptionselements in dem Hochdruckbereich eine beschleunigte Speicherung der Schwefel-Schadstoffe und die Speicherung einer größeren Menge an Schwefel-Schadstoffen ermöglicht. Sofern die Entschwefelung beispielsweise durch die bereits erläuterte Zuführung von Ammoniak in das Abgas erfolgt, kann diese effektive Art der Entschwefelung durch die erfindungsgemäße Anordnung besonders einfach bzw. mit wenig Aufwand realisiert werden, da, wie nachfolgend noch detaillierter erläutert wird, aufgrund des höheren Drucks in dem Hochdruckbereich das Ammoniumsulfat bzw. das Ammoniumhydrogensulfat trotz der hohen Temperatur des Abgases gebildet werden. Die erfindungsgemäße Anordnung der Speichereinrichtung in dem Hochdruckbereich stromauf der wenigstens einen Turbine ist daher eine besonders einfache Maßnahme, mittels der die Effektivität der Reduzierung von Schwefel-Schadstoffen erhöht werden kann. Aufgrund der Stauwirkung der wenigstens Turbine kann in dem Hochdruckbereich dabei beispielsweise ein Druck im Bereich von etwa 0,8 MPa vorherrschen, während in dem Niederdruckbereich nur ein Druck von etwa 0,1 MPa vorherrscht.

In einer bevorzugten Ausführung des erfindungsgemäßen Abgasnachbehandlungssystems ist die Speichereinrichtung als das bereits erwähnte Sorptionselement ausgebildet, mittels dem die Schwefel-Schadstoffe sorbiert werden können. Mit dem Sorptionselement können die Schwefel-Schadstoffe auf besonders einfache Weise gespeichert bzw. zwischengespeichert werden. Besonders bevorzugt ist die als Sorptionselement ausgebildete Speichereinrichtung dabei aus einem Sorptionsmaterial, insbesondere aus Zeolith und/oder aus Calcium und/oder aus Barium, hergestellt. Alternativ kann die als Sorptionselement ausgebildete Speichereinrichtung auch ein Bauteil sein, das mit dem Sorptionsmaterial beschichtet ist.

Alternativ und/oder zusätzlich zu der Ausbildung der Speichereinrichtung als Sorptionselement kann auch eine Zuführ-Einrichtung vorgesehen sein, mittels der dem Abgas stromauf der wenigstens einen Speichereinrichtung ein in einem Speicher-Behälter gespeichertes Reaktionsmittel zugeführt werden kann, mittels dem die in dem Abgas enthaltenen Schwefel-Schadstoffe in Feststoffe, insbesondere in leicht zersetzbare Salze, umgewandelt werden können. Die Speichereinrichtung ist dann als Filterelement ausgebildet, mittels dem die in Feststoffe umgewandelten Schwefel-Schadstoffe aus dem Abgasstrom gefiltert und gespeichert werden können. Die Umwandlung der Schwefel-Schadstoffe des Abgases in Feststoffe und die nachfolgende Filterung dieser Feststoffe aus dem Abgasstrom sind, wie bereits erwähnt, eine besonders effektive Methode zur Speicherung der in dem Abgas enthaltenen Schwefel-Schadstoffe, da die Schwefel-Schadstoffe in Feststoffe bzw. Partikel umgewandelt werden und diese Feststoffe dann von der als Filterelement ausgebildeten Speichereinrichtung einfach aufgefangen werden können. Zudem wird mit dieser Methode auch sichergestellt, dass allein die Schwefel-Schadstoffe in der Speichereinrichtung gespeichert werden. Andere, insbesondere gasförmige, Stoffe des Abgases können die als Filterelement ausgebildete Speichereinrichtung einfach passieren. So wird auch die Speicherfähigkeit der Speichereinrichtung durch andere in dem Abgas enthaltene Stoffe nicht negativ beeinflusst.

Bevorzugt ist das Reaktionsmittel Ammoniak oder eine Vorstufe von Ammoniak, insbesondere eine wässrige Harnstofflösung. Mittels des Ammoniaks reagieren die in dem Abgas enthaltenen Schwefel-Schadstoffe dann, wie bereits erwähnt, beispielsweise zu den Feststoffen Ammoniumsulfat und Ammoniumhydrogensulfat. Diese Reaktion findet dabei, wie ebenfalls bereits erwähnt, trotz der hohen Temperaturen des Abgases statt, da der Ammoniak in dem Hochdruckbereich stromauf der Turbine dem Abgas der Brennkraftmaschine zugeführt wird. Durch den höheren Druck in dem Hochdruckbereich verschiebt sich das chemische Gleichgewicht der Reaktionsgleichungen zur Bildung der Feststoffe Ammoniumsulfat und Ammoniumhydrogensulfat aus Ammoniak und den Schwefel-Schadstoffen auf die Seite bzw. in Richtung von Ammoniumsulfat und Ammoniumhydrogensulfat. Die zuzuführende Menge an Ammoniak wird dabei bevorzugt in Abhängigkeit von wenigstens einem Parameter, beispielsweise vom Schwefelgehalt des Kraftstoffs, vom aktuellen Verbrennungsluftverhältnis und/oder von der aktuell rückgeführten Abgasmenge einer Abgasrückführung des Fahrzeugs, mittels eines Steuergeräts selbsttätig bzw. automatisch gesteuert. Besonders bevorzugt ist in dem Abgasstrang auch wenigstens ein SCR-Katalysator angeordnet, dem das derart ausgebildete Reaktionsmittel mit einer Zuführ-Einrichtung ebenfalls zugeführt werden kann. Auf diese Weise kann der Ammoniak oder die Vorstufe des Ammoniaks auch zur Reduzierung der Stickstoff-Emissionen in dem Abgas verwendet werden.

Vorzugsweise ist die wenigstens eine Speichereinrichtung als SCR-Katalysator ausgebildet. So kann für die Umwandlung der Schwefel-Schadstoffe verwendeter, dabei jedoch nicht vollständig verbrauchter Ammoniak für die Reduzierung der Stickstoff-Emissionen der Brennkraftmaschine verwendet werden. Dadurch wird der verwendete Ammoniak vollständig genutzt und die Ammoniak-Emissionen des Fahrzeugs werden auf einfache und zuverlässige Weise reduziert. Zudem wird auch die Bildung von hochexplosivem Ammoniumnitrat in dem Abgasstrang vermieden, da das hierzu notwendige NO₂ in der SCR-Reaktion verbraucht wird. Um die Effektivität der SCR-Reaktion zu erhöhen, kann die Speichereinrichtung mit engen Strömungskanälen ausgebildet sein.

Alternativ und/oder zusätzlich kann der wenigstens eine SCR-Katalysator stromab der Speichereinrichtung in dem Abgasstrang angeordnet sein. Bevorzugt ist dabei ein einziger, insbesondere stromauf der Turbine und/oder der Speichereinrichtung in dem Abgasstrang angeordneter, Zuführbereich zur Zuführung des Reaktionsmittels für die Speichereinrichtung und den SCR-Katalysator in das Abgas vorgesehen. So wird die Zuführung deutlich vereinfacht, da das Reaktionsmittel nur an einer einzigen Stelle des Abgasstrangs in den Abgasstrang eingeführt bzw. dem Abgas zugeführt wird. Die Anordnung des Zuführbereichs stromauf der Turbine und/oder der Speichereinrichtung ist dabei vorteilhaft, da das mit Reaktionsmittel vermischte Abgas dann nicht mit aufwendigen Fördermaßnahmen von dem Niederdruckbereich in den Hochdruckbereich gefördert werden muss.

In einer weiteren bevorzugten Ausführungsform kann die Speichereinrichtung in einer Abgasrückführung des Abgasstrangs angeordnet sein, mittels der ein Teil des von der Brennkraftmaschine emittierten Abgases wieder der Brennkraftmaschine zugeführt werden kann. Dadurch ist es möglich, eine Abgasrückführung auch bei einem Betreiben der Brennkraftmaschine mit hochschwefelhaltigen Kraftstoffen, wie es beispielsweise bei Wasserfahrzeugen üblich ist, vorzusehen bzw. zu verwenden. Das bei der Verbrennung der hochschwefelhaltigen Kraftstoffe entstehende Schwefeldioxid sowie die in der üblicherweise gekühlten Abgasrückführung aus dem Schwefeldioxid entstehende Schwefelsäure bzw. schwefelige Säure führen nämlich regelmäßig zu einer starken Korrosion einzelner Bauteile der Brennkraftmaschine, beispielsweise des Ladeluftrohrs, der Einlassventile oder der Laufbuchsen, so dass üblicherweise auf eine Abgasrückführung verzichtet wird, wenn die Brennkraftmaschine mit hochschwefelhaltigen Kraftstoffen betrieben wird. Sofern die Speicherung der Schwefel-Schadstoffe in der Speichereinrichtung durch Umwandlung der Schwefel-Schadstoffe in Feststoffe mittels Ammoniak erfolgt, zerfallen die Feststoffe im Brennraum der Brennkraftmaschine, wenn sie die Speichereinrichtung passieren und in den Brennraum gelangen sollten. Eine erhöhte Abrasion an einzelnen Bauteilen der Brennkraftmaschine, beispielsweise an den Laufbuchsen, durch die Feststoffe kann somit ausgeschlossen werden. Alternativ und/oder zusätzlich kann die Speichereinrichtung auch stromauf der Abgasrückführung in dem Abgasstrang angeordnet sein.

In einer besonders bevorzugten Ausführung ist eine Abzug-Einrichtung vorgesehen, mittels der die gespeicherten Schwefel-Schadstoffe aus dem Abgasstrang abgezogen und/oder entfernt werden können, wobei die abgezogenen und/oder entfernten Schwefel-Schadstoffe einer Reaktor-Einrichtung zugeführt werden können, in der die Schwefel-Schadstoffe zu definierten, insbesondere unschädlichen, Stoffen umgewandelt werden können. Mittels der Abzug-Einrichtung und der Reaktor-Einrichtung können die Speichereinrichtungen regeneriert werden, sofern sie bereits eine große Menge an Schwefel-Schadstoffen gespeichert haben. Die Verwendung der Abzug-Einrichtung und der Reaktor-Einrichtung ist dabei eine besonders einfache und gleichzeitig effektive Methode, die Schwefel-Schadstoffe in unschädliche Stoffe umzuwandeln, da diese Umwandlung außerhalb des Abgasstrangs erfolgt. So können die für diese Umwandlung notwendigen Umgebungsbedingungen deutlich einfacher und gezielt in der außerhalb des Abgasstrangs angeordneten Reaktor-Einrichtung eingestellt bzw. geschaffen werden.

Konkret kann der Abgasstrang beispielsweise zwei parallel vom Abgas durchströmte Abgasstrangteile aufweisen, wobei in jedem dieser Abgasstrangteile wenigstens eine Speichereinrichtung angeordnet ist. Die Abzug-Einrichtung weist dann zur strömungstechnischen Entkoppelung der Abgasstrangteile von dem Abgasstrom eine Entkoppelungs-Ventileinrichtung auf, die in einer ersten Ventilstellung keines der beiden Abgasstrangteile entkoppelt, in einer zweiten Ventilstellung ein erstes der beiden Abgasstrangteile entkoppelt, während das zweite der beiden Abgasstrangteile nicht entkoppelt ist, und in einer dritten Ventilstellung das zweite der beiden Abgasstrangteile entkoppelt, während das erste der beiden Abgasstrangteile nicht entkoppelt ist. Durch die strömungstechnische Entkoppelung der Abgasstrangteile wird das Abziehen bzw. Entfernen der gespeicherten Schwefel-Schadstoffe aus dem Abgasstrang deutlich vereinfacht. Zudem wird durch die Entkoppelung von höchstens einem der beiden Abgasstrangteile sichergestellt, dass das Abgas weiter durch den Abgasstrang strömen kann. Selbstverständlich ist es auch möglich, mehr als zwei derartige Abgasstrangteile vorzusehen. Es ist dabei lediglich erforderlich, dass wenigstens eines dieser Abgasstrangteile stets nicht entkoppelt ist bzw. vom Abgas durchströmt werden kann.

Weiter kann die Abzug-Einrichtung wenigstens eine Entlastungs-Ventileinrichtung aufweisen, mittels der die Abgasstrangteile druckentlastbar sind, wobei die eine Entlastungs-Ventileinrichtung einer ersten Ventilstellung keinen der beiden Abgasstrangteile druckentlastet, in einer zweiten Ventilstellung den ersten der beiden Abgasstrangteile druckentlastet, während der zweite der beiden Abgasstrangteile nicht druckentlastet ist, und in einer dritten Ventilstellung den zweiten der beiden Abgasstrangteile druckentlastet, während der erste der beiden Abgasstrangteile nicht druckentlastet ist. Mittels der Entlastungs-Ventileinrichtung können die in der Speichereinrichtung gespeicherten Schwefel-Schadstoffe auf besonders einfache Weise wieder aus der Speichereinrichtung entfernt bzw. herausgelöst werden. So werden beispielsweise bei der als Sorptionselement ausgebildeten Speichereinrichtung die sorbierten Schwefel-Schadstoffe nach der Druckentlastung einfach wieder desorbiert. Bei der als Filterelement ausgebildeten Speichereinrichtung, mittels der in Feststoffe umgewandelte Schwefel-Schadstoffe aus dem Abgasstrom gefiltert und gespeichert werden, wandeln sich die Feststoffe nach der Druckentlastung wieder in die gasförmigen Schwefel-Schadstoffe um und die Schwefel-Schadstoffe lösen sich wieder aus der Speichereinrichtung.

Weiter kann die Abzug-Einrichtung wenigstens ein Verbindungselement aufweisen, mittels dem die Abgasstrangteile stromauf der Speichereinrichtung strömungstechnisch mit der Reaktor-Einrichtung verbindbar sind. Dem Verbindungselement ist dann eine Verbindungs-Ventileinrichtung zugeordnet, die in einer ersten Ventilstellung den Abgasstrom durch das Verbindungselement sperrt, in einer zweiten Ventilstellung den Abgasstrom von dem ersten der beiden Abgasstrangteile hin zu der Reaktoc-Einrichtung freigibt, während der Abgasstrom von dem zweiten der beiden Abgasstrangteile hin zu der Reaktor-Einrichtung gesperrt ist, in einer dritten Ventilstellung den Abgasstrom von dem zweiten der beiden Abgasstrangteile hin zu der Reaktor-Einrichtung freigibt, während der Abgasstrom von dem ersten der beiden Abgasstrangteile hin zu der Reaktor-Einrichtung gesperrt ist. Mittels des Verbindungselements können die Schwefel-Schadstoffe der Reaktor-Einrichtung auf einfache und zuverlässige Weise zugeführt werden.

Bevorzugt weist die Abzug-Einrichtung weiter eine Bypass-Einrichtung auf, mittels der die Abgasstrangteile stromab der Speichereinrichtungen und stromauf eines Verbindungsbereichs der Abgasstrangteile strömungstechnisch miteinander verbunden werden können. Der Bypass-Einrichtung ist dann eine Bypass-Ventileinrichtung zugeordnet, die in einer ersten Ventilstellung den Abgasstrom durch die Bypass-Einrichtung sperrt und in einer zweiten Ventilstellung den Abgasstrom durch die Bypass-Einrichtung wenigstens teilweise freigibt. Mittels der Bypass-Einrichtung können die aus der Speichereinrichtung gelösten bzw. entfernen Schwefel-Schadstoffe auf besonders einfache Weise der Reaktor-Einrichtung zugeführt werden, da sie von dem durch die Bypass-Einrichtung strömenden Abgasstrom mitgerissen werden. Das heiße, bereits von Schwefel-Schadstoffen gereinigte Abgas ermöglicht zudem ein besonders rasches und effektives Lösen bzw. Entfernen der Schwefel-Schadstoffe aus der Speichereinrichtung.

Weiter bevorzugt weist die Abzug-Einrichtung wenigstens eine Fördereinrichtung, insbesondere eine Pumpe, auf, mittels der die Schwefel-Schadstoffe über das wenigstens eine Verbindungselement von den Abgasstrangteilen zu der Reaktor-Einrichtung gefördert werden können. Die wenigstens eine Fördereinrichtung stellt eine zuverlässige Förderung der Schwefel-Schadstoffe sicher.

Konkret kann die Reaktor-Einrichtung zur Umwandlung der Schwefel-Schadstoffe einen Schadstoff-Wäscher aufweisen. Als Waschmittel kann dabei beispielsweise eine wässrige Kalziumhydroxid-Lösung oder Kalziumoxid-Lösung verwendet werden. Alternativ und/oder zusätzlich kann die Reaktor-Einrichtung zur Umwandlung der Schwefel-Schadstoffe auch ein Festbett-Reaktionselement aufweisen. Dieses Festbett-Reaktionselement kann dabei beispielsweise aus Kalziumhydroxid oder Kalziumoxid hergestellt sein. Weiter alternativ kann die Reaktor-Einrichtung zur Umwandlung der Schwefel-Schadstoffe eine Kühleinrichtung und eine Kondensations-Einrichtung zur Kühlung und Kondensation der Schwefel-Schadstoffe aufweisen. Auf diese Weise werden die Schwefel-Schadstoffe dann zu Schwefelsäure aufoxidiert. Durch das Ausfällen von Kondensat mittels der Kühleinrichtung und der Kondensations-Einrichtung bilden sich schwefelige Säure und Schwefeldioxid, die dann mit Sauerstoff zu Schwefelsäure oxidiert werden. Zur Verbesserung der Oxidation ist dabei vorzugsweise eine Zuführeinrichtung vorgesehen, mittels der der Kühleinrichtung und/oder der Kondensations-Einrichtung Sauerstoff zugeführt wird. Die Oxidation der schwefeligen Säure kann bevorzugt zudem mittels eines geeigneten Katalysators, insbesondere eines vanadium- und/oder cer- und/oder alkali- und/oder erdalkalihaltigen Katalysators, verbessert werden.

Vorzugsweise ist weiter eine Bypass-Einrichtung vorgesehen, mittels der das aus dem Abgasstrang entfernte, von den Schwefel-Schadstoffen getrennte Reaktionsmittel dem Abgas stromauf der wenigstens Speichereinrichtung wieder zugeführt werden kann. So können die Schwefel-Schadstoffe auf besonders effektive Weise in der Speichereinrichtung gespeichert werden, da das hierzu erforderliche Reaktionsmittel erneut verwendet werden kann.

Bevorzugt ist zudem eine Mess- und/oder Steuereinrichtung vorgesehen, mittels der die in der wenigstens einen Speichereinrichtung gespeicherte Menge an Schwefel-Schadstoffen ermittelt werden kann, wobei bevorzugt vorgesehen ist, dass die Mess- und/oder Steuereinrichtung zur Ermittlung der in der Speichereinrichtung gespeicherten Menge an Schwefel-Schadstoffen eine Sensorik und/oder ein Simulationsmodell aufweist. Mittels der Mess- und/oder Steuereinrichtung kann beispielsweise ermittelt werden, wann die Speichereinrichtung regeneriert werden muss oder ob eine Regeneration erfolgreich war.

Zur Lösung der bereits erläuterten Aufgabe wird ferner ein Verfahren zum Betreiben eines Abgasnachbehandlungssystems für ein mit einer Brennkraftmaschine betriebenes Fahrzeug, insbesondere für ein Wasserfahrzeug vorgeschlagen, wobei das Abgasnachbehandlungssystem wenigstens eine in einem Abgasstrang angeordnete Turbine eines Abgasturboladers und wenigstens eine Speichereinrichtung aufweist, wobei der Abgasstrang, in Abgas-Strömungsrichtung gesehen, stromauf der Turbine als Hochdruckbereich und stromab der Turbine als gegenüber dem Hochdruckbereich einen niedrigeren Druck aufweisender Niederdruckbereich ausgebildet ist, und wobei mittels der Speichereinrichtung zumindest ein Teil der in dem Abgas enthaltenen Schwefel-Schadstoffe zumindest für einen definierten Zeitraum gespeichert und/oder zwischengespeichert werden. Erfindungsgemäß ist die wenigstens eine Speichereinrichtung stromauf der wenigstens einen Turbine in dem Abgasstrang angeordnet, so dass die Schwefel-Schadstoffe in dem Hochdruckbereich des Abgasstrangs gespeichert und/oder zwischengespeichert werden.

Die sich aus dem erfindungsgemäßen Verfahren und zahlreiche darauf rückbezogene Ansprüche ergebenden Vorteile sind identisch mit den bereits erläuterten Vorteilen des erfindungsgemäßen Abgasnachbehandlungssystems, so dass diese an dieser Stelle nicht wiederholt werden.

In einer bevorzugten Verfahrensführung sind die Entkopplungs-Ventileinrichtung, die Entlastungs-Ventileinrichtung und die Verbindungs-Ventileinrichtung in einer üblicherweise beim Betrieb der Brennkraftmaschine verwendeten Grundstellung in ihren ersten Ventilstellungen. Zur Regeneration der Speichereinrichtung eines der beiden Abgasstrangteile werden die Entkopplungs-Ventileinrichtung, die Entlastungs-Ventileinrichtung und die Verbindungs-Ventileinrichtung dann mittels einer Regel- und/oder Steuereinrichtung derart gesteuert, dass der Abgasstrangteil zunächst mittels der Entkopplungs-Ventileinrichtung von dem Abgasstrom entkoppelt wird, dass der Abgasstrangteil anschließend mittels der Entlastungs-Ventileinrichtung druckentlastet wird, und dass schließlich mittels der Verbindungs-Ventileinrichtung der Stoff-Strom von dem Abgasstrangteil zu der Reaktor-Einrichtung freigegeben wird. Auf diese Weise werden in der Grundstellung der Ventileinrichtungen die Schwefel-Schadstoffe des Abgases in den Speichereinrichtungen für einen definierten Zeitraum zwischengespeichert. Zur Regeneration der wenigstens einen Speichereinrichtung von einem der beiden Abgasstrangteile werden dann die Ventileinrichtungen in der erläuterten Weise für einen definierten Zeitraum umgesteuert. Nach erfolgter Regeneration können die Ventileinrichtungen dann wieder in ihre Grundstellung gebracht werden.

Vorzugsweise ist zudem, sofern die Bypass-Einrichtung vorgesehen ist, in der genannten Grundstellung die Bypass-Ventileinrichtung ebenfalls in ihrer ersten Ventilstellung. Zur Regeneration der Speichereinrichtung des Abgasstrangteils wird die Bypass-Ventileinrichtung mittels der Rege- und/oder Steuereinrichtung dann derart gesteuert, dass nach dem Entkoppeln des Abgasstrangteils der Abgasstrom durch die Bypass-Einrichtung mittels der Bypass-Ventileinrichtung wenigstens teilweise freigegeben wird. So kann in der Grundstellung die Bypass-Einrichtung nicht von dem Abgasstrom durchströmt werden. Zur Regeneration der Speichereinrichtung des Abgasstrangteils kann ein Teil des Abgasstroms in den entkoppelten Abgasstrangteil eingeleitet werden.

Ferner wird ein Fahrzeug, insbesondere ein Wasserfahrzeug, mit dem erfindungsgemäßen Abgasnachbehandlungssystem und/oder zur Durchführung des erfindungsgemäßen Verfahrens beansprucht. Die sich hieraus ergebenden Vorteile sind identisch mit den bereits gewürdigten Vorteilen des erfindungsgemäßen Abgasnachbehandlungssystems und des erfindungsgemäßen Verfahrens, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: In einer schematischen Darstellung von oben ein sich in einem Küstenbereich befindendes Schiff;
- Fig. 2: in einer schematischen Darstellung eine erste Ausführungsform eines Abgasnachbehandlungssystems des Schiffs;
- Fig. 3: in einer Darstellung gemäß Fig. 2 eine erste Betriebsweise des Abgasnachbehandlungssystems;
- Fig. 4: in einer Darstellung gemäß Fig. 2 eine zweite Betriebsweise des Abgasnachbehandlungssystems;
- Fig. 5: in einer Darstellung gemäß Fig. 2 eine dritte Betriebsweise des Abgasnachbehandlungssystems;
- Fig. 6: in einer Darstellung gemäß Fig. 2 eine zweite Ausführungsform des Abgasnachbehandlungssystems;
- Fig. 7: in einer Darstellung gemäß Fig. 6 eine dritte Ausführungsform des Abgasnachbehandlungssystems;
- Fig. 8: in einer Darstellung gemäß Fig. 7 eine vierte Ausführungsform des Abgasnachbehandlungssystems;
- Fig. 9: in einer Darstellung gemäß Fig. 8 eine fünfte Ausführungsform des Abgasnachbehandlungssystems; und
- Fig. 10: in einer Darstellung gemäß Fig. 6 eine sechste Ausführungsform des Abgasnachbehandlungssystems.

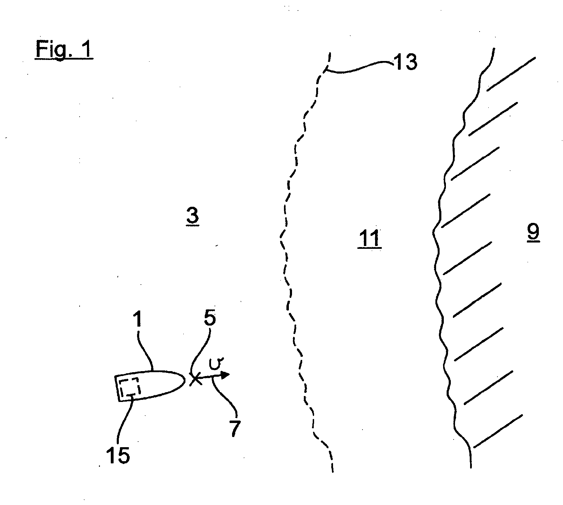

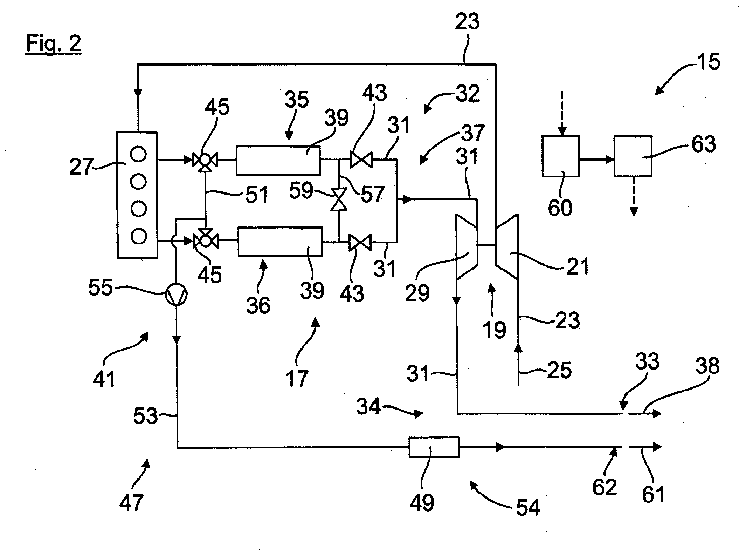

In Fig. 1 ist ein beispielhaft als Schiff 1 ausgebildetes Fahrzeug gezeigt, das sich auf einem Gewässer 3 in einer Position 5 befindet und sich mit einer Geschwindigkeit v in Fahrtrichtung 7 hin zu einer Küste 9 bewegt. In einem küstennahen Bereich des Gewässers 3 befindet sich eine sogenannte Emission Controlled Area 11 (ECA), die sich ausgehend von der Küste 9 über eine definierte Distanz bis hin zu einer mit gestrichelten Linien angedeuteten Begrenzung 13 erstreckt. Bei der in Fig. 1 gezeigten Darstellung befindet sich das Schiff 1 noch außerhalb der ECA 11, es ist jedoch auf dem Weg hinein in die ECA 11. In der küstennahen ECA 11 gelten strengere Abgasvorschriften für das Schiff 1 als außerhalb der ECA 11 auf dem Gewässer 3. So sind beispielsweise in der ECA 11 deutlich weniger Schwefel-Emissionen zulässig als außerhalb der ECA 11. Um die Abgasvorschriften in der ECA 11 einzuhalten, weist eine in Fig. 1 mit gestrichelten Linien angedeutete Antriebseinrichtung 15 des Schiffs 1 ein Abgasnachbehandlungssystem 17 (Fig. 2) auf, mittels dem die in dem Abgas der Antriebseinrichtung 15 enthaltenen Schwefel-Schadstoffe effektiv reduziert werden.

Der Aufbau und die Funktionsweise der Antriebseinrichtung 15 werden im Folgenden anhand der Fig. 2 näher erläutert:
Wie in Fig. 2 gezeigt ist, weist die Antriebseinrichtung 15 einen Abgasturbolader 19 mit einem Verdichter 21 auf, der in einem Ansaugtrakt 23 der Antriebseinrichtung 15 angeordnet ist. Mittels des Ansaugtraktes 23 wird eine Verbrennungsluft (Pfeil 25) zunächst dem Verdichter 21 des Abgasturboladers 19 zugeführt, anschließend mit dem Verdichter 21 verdichtet und schließlich einer Brennkraftmaschine 27 der Antriebseinrichtung 15 zugeführt. Weiter weist der Abgasturbolader 19 auch eine in einem Abgasstrang 31 des Abgasnachbehandlungssystems 17 angeordnete Turbine 29 auf, die in herkömmlicher Weise mit dem durch den Abgasstrang 31 strömenden Abgasstrom der Brennkraftmaschine 27 angetrieben wird. Durch die Verwendung des Abgasturboladers 19 ist der Abgasstrang 31 stromauf der Turbine 31 als Hochdruckbereich 32 ausgebildet, in dem das Abgas einen höheren Druck aufweist als in einem Niederdruckbereich 34 des Abgasstrangs 31 stromab der Turbine 31. In Abgas-Strömungsrichtung gesehen, stromab der Turbine 29 weist der Abgasstrang 31 weiter eine Mündungsöffnung 33 auf, an der ein gereinigtes Abgas 38 aus dem Abgasstrang 31 ausströmt.

In Abgas-Strömungsrichtung gesehen, stromauf der Turbine 29, weist der Abgasstrang 31 mehrere, hier beispielhaft zwei, parallel vom Abgas durchströmte Abgasstrangteile 35, 36 auf, die mittels eines Abgaskrümmers 38 strömungstechnisch mit der Brennkraftmaschine 27 verbunden sind und mit an einem Verbindungsbereich 37 des Abgasstrangs 31 wieder zusammengeführt sind. In jedem der Abgasstrangteile 35, 36 ist hier eine Speichereinrichtung 39 angeordnet, mittels der zumindest ein Teil der in dem Abgas enthaltenen Schwefel-Schadstoffe für einen definierten Zeitraum zwischengespeichert werden. Konkret sind die Speichereinrichtungen 39 bei der in Fig. 2 gezeigten Ausführung des Abgasnachbehandlungssystem 15 als Sorptionselemente ausgebildet, mittels denen die an den Speichereinrichtungen 15 vorbeiströmenden Schwefel-Schadstoffe des Abgases sorbiert werden. Die Speichereinrichtung 39 kann dabei beispielsweise aus einem Sorptionsmaterial, beispielsweise aus Zeolith, Kalzium oder Barium, hergestellt sein oder aber auch mit einem Sorptionsmaterial beschichtet sein.

Des Weiteren können die als Sorptionselemente ausgebildeten Speichereinrichtungen 39 hier beispielhaft auch regeneriert bzw. von Schwefel-Schadstoffen befreit werden, wenn dies erforderlich ist. Eine Regeneration kann beispielsweise erforderlich sein, wenn eine große Menge an Schwefel-Schadstoffen in den Speichereinrichtungen 39 gespeichert ist und dadurch die Sorptionseigenschaften der Speichereinrichtungen 39 nachlassen. Zur Regeneration der Speichereinrichtungen 39 ist hier eine Abzug-Einrichtung 41 vorgesehen, mittels der die in den Speichereinrichtungen 39 gespeicherten Schwefel-Schadstoffe zunächst aus dem Abgasstrang 31 abgezogen bzw. entfernt werden können.

Die Abzug-Einrichtung 41 weist hier beispielhaft zwei Durchgangsventile 43 und zwei Mehrwege-Ventile 45 auf, wobei in jedem Abgasstrangteil 35, 36 stromab der Speichereinrichtungen 39 jeweils ein Durchgangsventil 43 und stromauf der Speichereinrichtung 39 jeweils ein Mehrwege-Ventil 45 angeordnet ist. In einer ersten Ventilstellung des jeweiligen Durchgangsventils 43 wird dabei ein Abgasstrom durch das jeweilige Durchgangsventil 43 freigegeben. In einer zweiten Ventilstellung des jeweiligen Durchgangsventils 43 wird ein Abgasstrom durch das jeweilige Durchgangsventil 43 gesperrt. In einer ersten Ventilstellung des jeweiligen Mehrwege-Ventils 45 wird nur ein Abgasstrom von der Brennkraftmaschine 27 in das jeweilige Abgasstrangteil 35 freigeben. In einer zweiten Ventilstellung des jeweiligen Mehrwege-Ventils 45 wird nur ein Abgasstrom von dem jeweiligen Abgasstrangteil 35 in ein an die Mehrwege-Ventile 45 angeschlossenes Verbindungselement 47 der Abzug-Einrichtung 41 freigeben.

Sind daher sowohl das Durchgangsventil 43 als auch das Mehrwegeventil 45 von einem der beiden Abgasstrangteile 35 oder 36 in ihren zweiten Ventilstellungen, ist dieser Abgasstrangteil 35 oder 36 strömungstechnisch von dem Abgasstrom entkoppelt. Sind sowohl das Durchgangsventil 43 als auch das Mehrwegeventil 45 eines der beiden Abgasstrangteile 35 oder 36 in ihren ersten Ventilstellungen, ist dieser Abgasstrangteil 35 oder 36 nicht von dem Abgasstrom entkoppelt.

Des Weiteren können die Abgasstrangteile 35, 36 mittels des Verbindungselements 47 strömungstechnisch mit einer Reaktor-Einrichtung 49 des Abgasnachbehandlungssystems 17 verbunden werden. Konkret weist das Verbindungselement 47 hier beispielhaft ein an beide Mehrwege-Ventile 45 angeschlossenes erstes Rohrelement 51 und ein an das erste Rohrelement 51 und an die Reaktor-Einrichtung 49 angeschlossenes zweites Rohrelement 53 auf. Zudem weist die Abzug-Einrichtung 41 auch eine dem zweiten Rohrelement 53 zugeordnete Fördereinrichtung 55, beispielsweise eine Pumpe, auf, mittels der ein Abgasstrom von den Abgasstrangteilen 35 hin zu der Reaktor-Einrichtung 49 gefördert werden kann.

Das Verbindungselement 47 und die Reaktor-Einrichtung 49 bilden weiter einen Niederdruckbereich 54 aus, der ein ähnliches Druckniveau wie der Niederdruckbereich 34 des Abgasstrangs 31 aufweist. In der zweiten Ventilstellung der Mehrwege-Ventile 45 werden die Abgasstrangteile 35, 36 daher druckentlastet.

Des Weiteren weist die Abzug-Einrichtung 41 auch eine Bypass-Einrichtung 57 auf, mittels der die Abgasstrangteile 35, 36 stromab der Speichereinrichtungen 39 und stromauf des Verbindungsbereichs 37 strömungstechnisch miteinander verbunden werden können. Die Bypass-Einrichtung 57 weist eine Bypass-Ventileinrichtung, hier beispielhaft ein stufenlos verstellbares Durchgangsventil 59, auf, mittels der der Abgasstrom durch die Bypass-Einrichtung 57 gesperrt und zumindest teilweise freigegeben werden kann.

Die mittels der Abzug-Einrichtung 41 aus dem Abgasstrang 31 abgezogen bzw. entfernten Schwefel-Schadstoffe können mittels der der Reaktor-Einrichtung 47 zu unschädlichen Stoffen umgewandelt werden. Die Reaktor-Einrichtung 47 kann hierzu beispielhaft einen Schadstoff-Wäscher und/oder ein Festbett-Reaktionselement aufweisen. Alternativ und/oder zusätzlich kann die Reaktor-Einrichtung zur Umwandlung der Schwefel-Schadstoffe auch eine Kühleinrichtung und eine Kondensations-Einrichtung zur Kühlung und Kondensation der Schwefel-Schadstoffe aufweisen. Auf diese Weise werden die Schwefel-Schadstoffe dann zu Schwefelsäure aufoxidiert. Durch das Ausfällen von Kondensat mittels der Kühleinrichtung und der Kondensations-Einrichtung bilden sich schwefelige Säure und Schwefeldioxid, die dann mit Sauerstoff zu Schwefelsäure oxidiert werden. Zur Verbesserung der Oxidation ist dabei vorzugsweise eine Zuführeinrichtung vorgesehen, mittels der der Kühleinrichtung und/oder der Kondensations-Einrichtung Sauerstoff zugeführt wird. Die Oxidation der schwefeligen Säure kann bevorzugt zudem mittels eines geeigneten Katalysators, insbesondere eines vanadium- und/oder cer- und/oder alkali- und/oder erdalkalihaltigen Katalysators, verbessert werden.

Weiter ist auch eine Mess- und/oder Steuereinrichtung 60 vorgesehen, mittels der die in den Speichereinrichtungen 39 gespeicherten Mengen an Schwefel-Schadstoffen ermittelt werden kann. Die Mess- und/oder Steuereinrichtung 60 ist zudem datenübertragend mit einer Regel- und/oder Steuereinrichtung 63 verbunden, mittels der hier die Durchgangsventile 43, die Mehrwegeventile 45, das Durchgangsventil 59 und die Fördereinrichtung 55 in Abhängigkeit von den in den Speichereinrichtungen 39 gespeicherten Mengen an Schwefel-Schadstoffen selbsttätig bzw. automatisch gesteuert werden. Mittels der Regel- und/oder Steuereinrichtung 63 kann das Abgasnachbehandlungssystem 17 dabei in die folgenden drei Betriebsweisen versetzt werden:

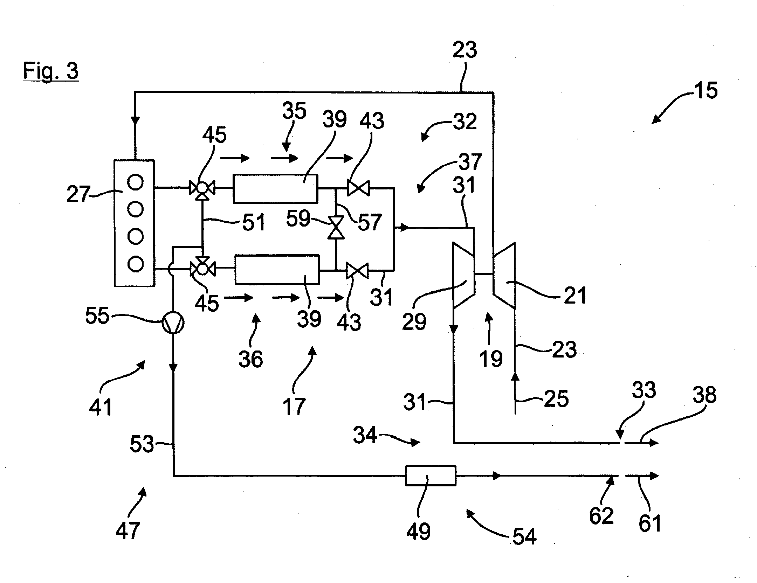

In Fig. 3 ist das Abgasnachbehandlungssystem 17 in einer herkömmlichen ersten Betriebsweise gezeigt, in der die Schwefel-Schadstoffe des Abgases mittels der Speichereinrichtungen 35 der Abgasstrangteile 35, 36 sorbiert werden. Die Durchgangsventile 43 und die Mehrwegeventile 45 sind dabei in ihren ersten Ventilstellungen, so dass der Abgasstrom von der Brennkraftmaschine 27 zu der Turbine 29 freigegeben ist und der Abgasstrom in das Verbindungselement 47 gesperrt ist. Zudem ist das stufenlos verstellbare Durchgangsventil 59 in seiner Sperrstellung, so auch dass der Abgasstrom durch die Bypass-Einrichtung 57 gesperrt ist. Diese Stellung der Ventile wird als Grundstellung bezeichnet. Des Weiteren ist die Fördereinrichtung 55 hier deaktiviert.

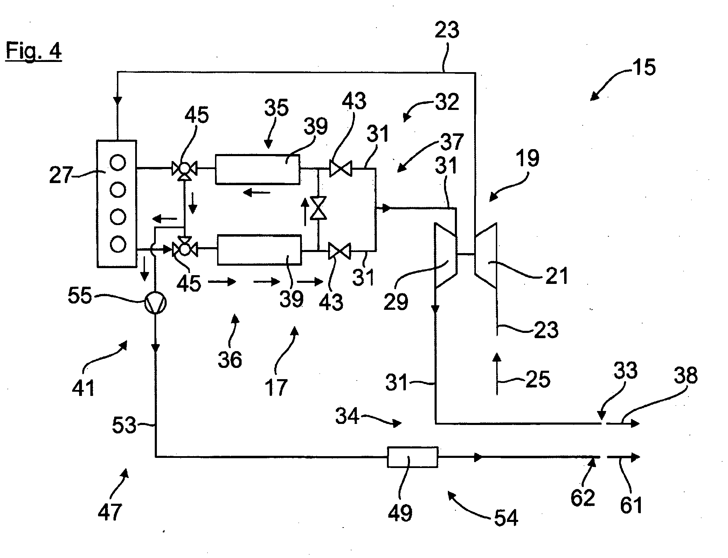

In Fig. 4 eine zweite Betriebsweise des Abgasnachbehandlungssystem 17 gezeigt, bei der die Speichereinrichtung 39 des Abgasstrangteils 35 regeneriert wird. Dabei sind das Durchgangsventil 43 und das Mehrwege-Ventil 45 des Abgasstrangteils 35 in ihren zweiten Ventilstellungen, so dass der Abgasstrom von der Brennkraftmaschine 27 zu der Turbine 29 über das Abgasstrangteil 35 gesperrt ist und der Abgasstrom von dem Abgasstrangteil 35 in das Verbindungselement 47 freigegeben ist. Zudem sind das Durchgangsventil 43 und das Mehrwege-Ventil 45 des Abgasstrangteils 36 in ihren ersten Ventilstellungen, so dass der Abgasstrom von der Brennkraftmaschine 27 zu der Turbine 29 über das Abgasstrangteil 36 freigegeben ist und der Abgasstrom von dem Abgasstrangteil 36 in das Verbindungselement 47 gesperrt ist. Das stufenlos verstellbare Durchgangsventil 59 ist hier zudem zumindest teilweise geöffnet, so dass der Abgasstrom durch die Bypass-Einrichtung 57 zumindest teilweise freigegeben ist. Des Weiteren ist die Fördereinrichtung 55 hier aktiviert.

Die Druckentlastung in dem Abgasstrangteil 35 bewirkt eine Desorption bzw. ein Freisetzen der in der Speichereinrichtung 39 des Abgasstrangteils 35 gespeicherten Schwefel-Schadstoffe. Mittels der Fördereinrichtung 55 wird hier zudem ein Unterdruck erzeugt, durch den die Desorption der Schwefel-Schadstoffe noch verbessert bzw. beschleunigt wird. Die freigesetzten Schwefel-Schadstoffe werden zusammen mit dem über die Bypass-Einrichtung 57 geleiteten Abgas mittels der Fördereinrichtung 55 der Reaktor-Einrichtung 49 zugeführt, wo die Schwefel-Schadstoffe in unschädliche Stoffe (Pfeil 61) umgewandelt und an einer Mündungsöffnung 62 aus dem Abgasnachbehandlungssystem 17 herausgeleitet werden. Nach erfolgter Regeneration der Speichereinrichtung 39 des Abgasstrangteils 35 wird das Abgasnachbehandlungssystem 17 wieder in die in Fig. 3 gezeigte erste Betriebsweise versetzt.

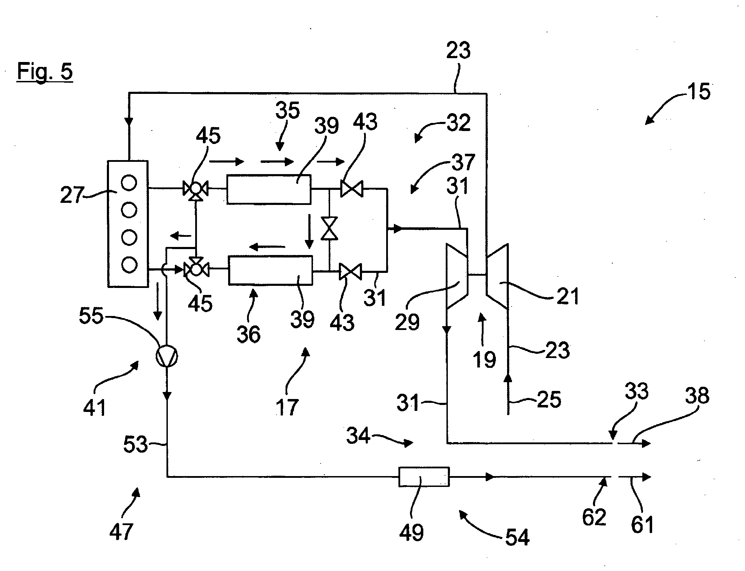

Analog zu der Regeneration der Speichereinrichtung 39 des Abgasstrangteils 35 in der zweiten Betriebsweise des Abgasnachbehandlungssystems 17 wird die Speichereinrichtung 39 des Abgasstrangteils 36 in einer dritten Betriebsweise des Abgasnachbehandlungssystems 17 regeneriert. Diese dritte Betriebsweise ist in Fig. 5 gezeigt.

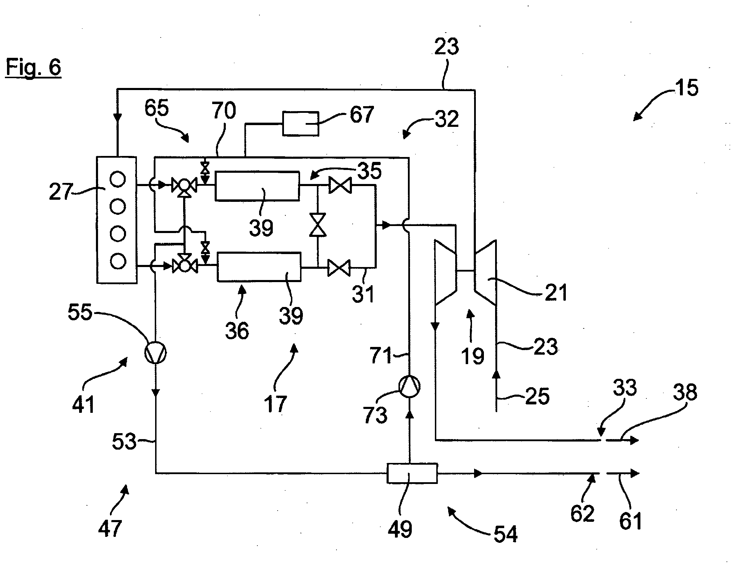

In Fig. 6 ist eine zweite Ausführungsform des Abgasnachbehandlungssystems 17 gezeigt. Die Speichereinrichtungen 39 des Abgasnachbehandlungssystems 17 sind hier nicht als Sorptionselemente, sondern als Filterelemente ausgebildet, mittels denen in Feststoffe umgewandelte Schwefel-Schadstoffe aus dem Abgasstrom gefiltert und gespeichert werden können. Zur Umwandlung der gasförmigen Schwefel-Schadstoffe in Feststoffe ist eine Zuführ-Einrichtung 65 vorgesehen, mittels der den Abgasstrangteilen 35, 36 stromab der Mehrwege-Ventile 45 und stromauf der Speichereinrichtungen 39 ein in einem Speicher-Behälter 67 gespeichertes Reaktionsmittel, hier beispielhaft eine wässrige Harnstofflösung, zugeführt werden kann. Nach Zuführung der wässrigen Harnstofflösung in die Abgasstrangteile 35, 36 vermischt sich die wässrige Harnstofflösung mit dem Abgas und erwärmt sich aufgrund der hohen Abgas-Temperaturen derart, dass sie in Ammoniak umgewandelt wird. Der Ammoniak reagiert mit den gasförmigen Schwefel-Schadstoffen des Abgases dann beispielsweise zu den Feststoffen Ammoniumsulfat und Ammoniumhydrogensulfat.

Durch die hohen Abgas-Temperaturen kann diese Reaktion nur aufgrund des hohen Drucks in dem Hochdruckbereich 32 des Abgasstrangs 31 stattfinden. Werden die Abgasstrangteile 35, 36 druckentlastet, wandeln sich die in den Speichereinrichtungen 39 gespeicherten Stoffe wieder in die gasförmigen Schwefel-Schadstoffe um. Die Regeneration der Speichereinrichtungen 39 kann hier somit identisch wie bei der in den Fig. 1 bis 5 gezeigten ersten Ausführungsform des Abgasnachbehandlungssystems 17 erfolgen.

Optional können die Speichereinrichtungen 39 hier zusätzlich auch als SCR-Katalysatoren ausgebildet sein, mittels denen die in dem Abgas der Brennkraftmaschine 27 enthaltenen Stickstoff-Emissionen verringert werden können. Die Reduzierung der Stickstoff-Emissionen erfolgt dabei mittels der in die Abgasstrangteile 35, 36 eingeleiteten wässrigen Harnstofflösung. Sofern, in Abgas-Strömungsrichtung gesehen, stromab der Speichereinrichtungen 35 wenigstens ein SCR-Katalysator in dem Abgassteang 31 angeordnet ist, wird mittels der Zuführ-Einrichtung 65 vorzugsweise eine derartige Menge an wässriger Harnstofflösung zugeführt, dass ausreichend wässrige Harnstofflösung für die Speicherung der Schwefel-Schadstoffe in den Speichereinrichtungen 39 und ausreichend wässrige Harnstofflösung für die Reduktion der Stickoxide in dem SCR-Katalysator vorhanden ist.

Die Zuführ-Einrichtung 65 weist bei der in Fig. 6 gezeigten Ausführungsform des Abgasnachbehandlungssystems 17 konkret ein Rohrelement 70 auf, das unmittelbar an den Speicher-Behälter 67 und an die Abgasstrangteile 35, 36 angeschlossen ist.

Das Abgasnachbehandlungssystem 17 weist bei der in Fig. 6 gezeigten Ausführungsform zudem eine Bypass-Einrichtung 71 auf, mittels der der aus dem Abgasstrang 31 mittels der Abzug-Einrichtung 41 entfernte Ammoniak der Zuführ-Einrichtung 65 wieder zugeführt werden kann. Die Bypass-Einrichtung 71 ist hier beispielhaft an die Reaktor-Einrichtung 49 und an das Rohrelement 70 angeschlossen und weist eine Fördereinrichtung 73, beispielsweise eine Pumpe, auf, mittels der der von den Schwefel-Schadstoffen gelöste bzw. entfernte Ammoniak ausgehend von der Reaktor-Einrichtung 49 in das Rohrelement 70 gefördert werden kann.

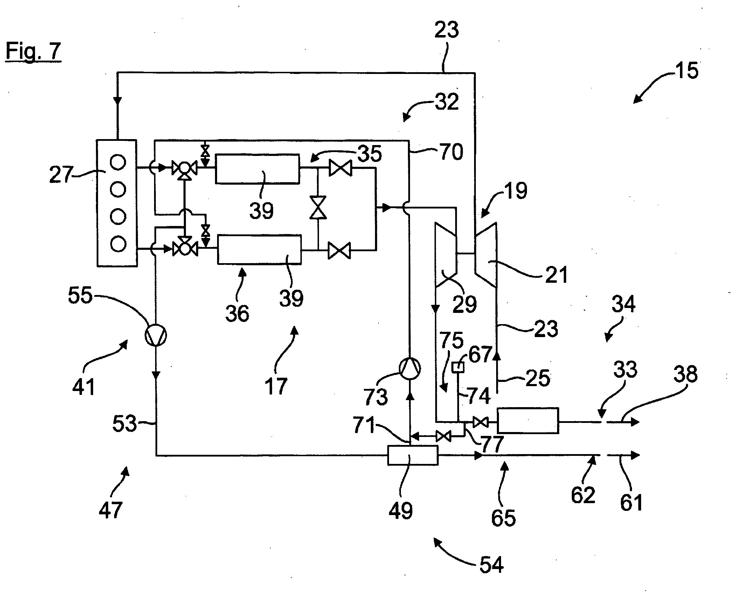

In Fig. 7 ist eine dritte Ausführungsform des Abgasnachbehandlungssystems 17 gezeigt. Bei dieser Ausführungsform ist, im Gegensatz zu der zweiten Ausführungsform gemäß Fig. 6, stromab der Turbine 29 ein SCR-Katalysator 72 in dem Abgasstrang 31 angeordnet, mittels dem die in dem Abgas enthaltenen Stickstoff-Emissionen reduziert werden können. Die Zuführ-Einrichtung 65 weist hier ein an den Speicherbehälter 65 angeschlossenes Rohrelement 74 auf, mittels dem die in dem Speicherbehälter 65 gespeicherte wässrige Harnstofflösung stromab der Turbine 29 an einem Zuführbereich 75 in den Abgasstrang 31 eingeleitet wird. Zudem weist die Zuführ-Einrichtung 65 hier auch ein Rohrelement 77 auf, das stromab des Zuführbereichs 75 und stromauf des SCR-Katalysators 72 an den Abgasstrang 31 sowie an das Rohrelement 70 angeschlossen ist. Die Fördereinrichtung 73 ist hier dem Rohrelement 70 zugeordnet.

Mit diesem Aufbau wird die wässrige Harnstofflösung zunächst mittels des Rohrelements 74 an dem Zuführbereich 75 in den Abgasstrang 31 eingeleitet, so dass sich die wässrige Harnstofflösung in dem Abgasstrang 31 mit dem Abgas vermischen kann. Ein Teil der mit dem Abgas vermischten wässrigen Harnstofflösung wird dann mittels des Rohrelements 77 in das Rohrelement 70 eingeleitet. Mittels des Rohrelements 70 wird die wässrige Harnstofflösung schließlich den Speichereinrichtungen 39 zugeführt.

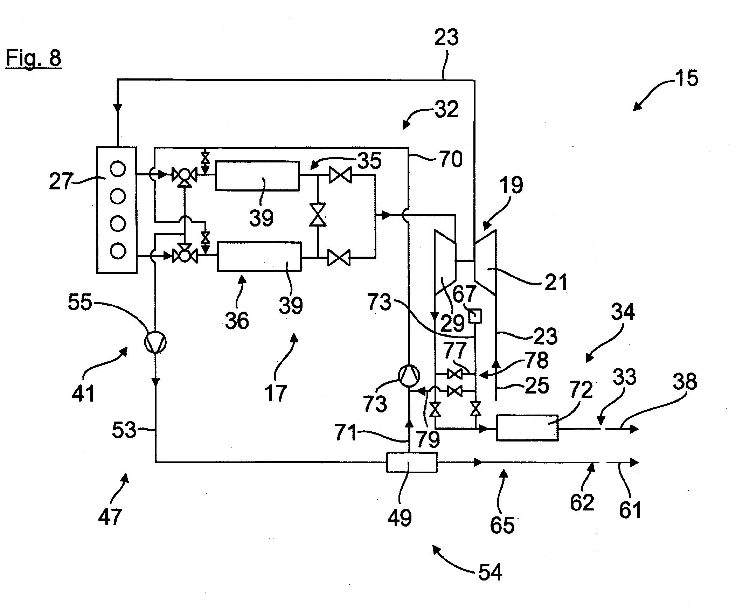

In Fig. 8 ist eine vierte Ausführungsform des Abgasnachbehandlungssystems 17 gezeigt. Bei dieser Ausführungsform ist, im Vergleich zu der dritten Ausführungsform gemäß Fig. 7, das Rohrelement 77 nicht an den Abgasstrang 31 angeschlossen, sondern an einem Zuführbereich 78 an das Rohrelement 74. Zudem weist die Zuführ-Einrichtung 65 hier ein Rohrelement 79 auf, das an das Rohrelement 70 und stromauf des Zuführbereichs 78 an das Rohrelement 74 angeschlossen ist.

Durch diesen Aufbau wird ein Teil des Abgasstroms in das Rohrelement 77 eingeleitet und dem Rohrelement 74 zugeführt. In dem Rohrelement 74 kann sich das Abgas mit der wässrigen Harnstofflösung des Speicher-Behälters 65 vermischen. Ein Teil der mit dem Abgas vermischten, wässrigen Harnstofflösung wird dann mittels des Rohrelements 79 in das Rohrelement 70 eingeleitet, über das die wässrige Harnstofflösung den Abgasstrangteilen 35, 36 zugeführt wird.

Diese vierte Ausführungsform hat, im Vergleich der Ausführung gemäß Fig. 7, den Vorteil, dass die Vermischung von Abgas und wässriger Harnstofflösung in dem Rohrelement 74 der Zuführ-Einrichtung 65 und nicht in dem Abgasstrang 31 erfolgt. Das Gemisch aus Abgas und wässriger Harnstofflösung weist hier einen deutlich höheren Anteil an wässriger Harnstofflösung auf, da nur ein Teil des Abgasstroms in das Rohrelement 74 gefördert wird. Dadurch muss hier deutlich weniger Abgas zu den Abgasstrangteilen 35, 36 gefördert werden, um die Abgasstrangteile 35, 36 ausreichend mit wässriger Harnstofflösung zu versorgen. So kann dann beispielsweise die Fördereinrichtung 73 kleiner dimensioniert werden oder mit weniger Förderleistung betrieben werden.

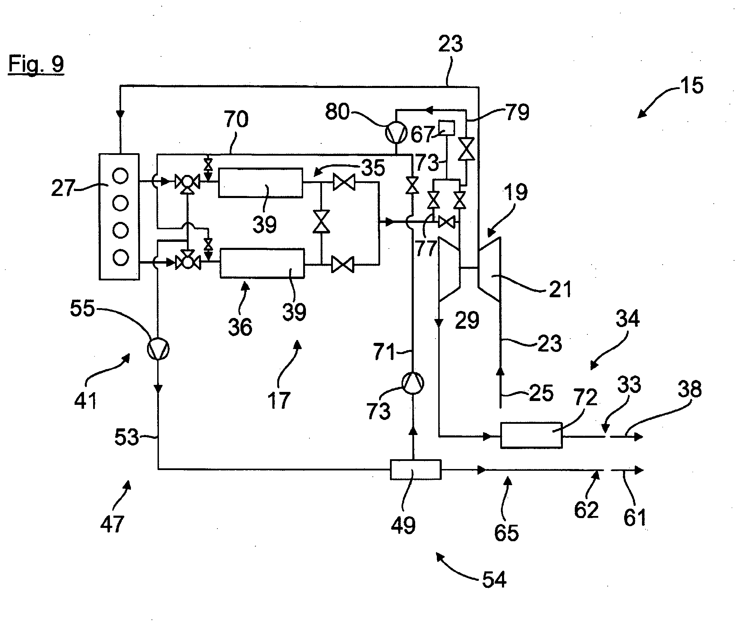

In Fig. 9 ist eine fünfte Ausführungsform des Abgasnachbehandlungssystems 17 gezeigt. Bei dieser Ausführungsform des Abgasnachbehandlungssystems 17 ist, im Vergleich zu der vierten Ausführungsform gemäß Fig. 8, die Zuführ-Einrichtung 65 nicht stromab der Turbine 29 an den Abgasstrang 31 angeschlossen, sondern stromab der Abgasstrangteile 35, 36 und stromauf der Turbine 29. Zudem ist die Fördereinrichtung 73 hier der Bypass-Einrichtung 71 zugeordnet und es ist eine zusätzliche, dem Rohrelement 79 zugeordnete Fördereinrichtung 80 vorgesehen. Ansonsten ist der Aufbau der fünften Ausführungsform identisch mit dem Aufbau der vierten Ausführungsform gemäß Fig. 8.

Bei der fünften Ausführungsform des Abgasnachbehandlungssystems 17 ist es vorteilhaft, dass die Vermischung von Abgas und wässriger Harnstofflösung in dem Hochdruckbereich 32 des Abgasstrangs 31 erfolgt. Das in der Zuführ-Einrichtung 65 gebildete Abgas-Harnstoff-Gemisch weist somit ein identisches bzw. ähnliches Druckniveau wie das Abgas in den Abgasstrangteilen 35, 36 auf und kann daher mit deutlich weniger Aufwand bzw. mit geringerer Förderleistung mit der Fördereinrichtung 80 in die Abgasstrangteile 34, 35 gefördert werden.

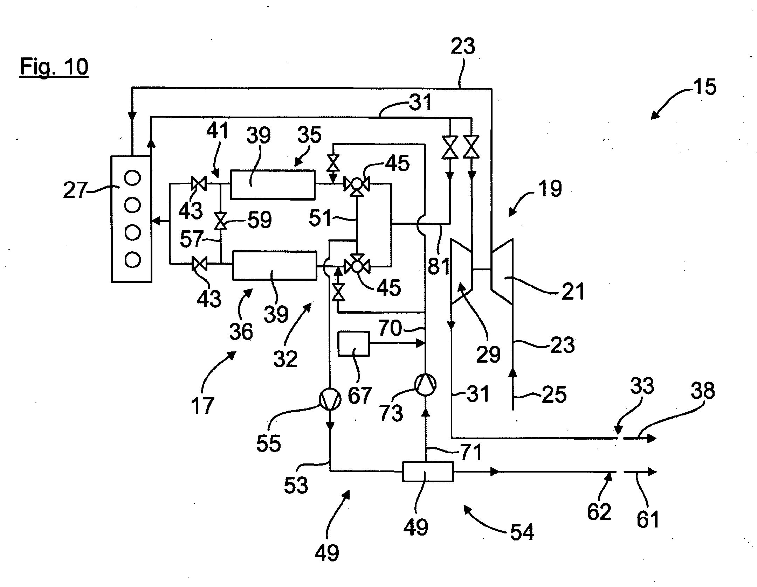

In Fig. 10 ist eine sechste Ausführungsform des Abgasnachbehandlungssystems 17 gezeigt. Bei dieser Ausführungsform des Abgasnachbehandlungssystems 17 weist das Abgasnachbehandlungssystem 17, im Gegensatz zu den in den Fig. 1 bis 9 gezeigten Ausführungen, eine Abgasrückführung 81 auf, mittels der ein Teil des von der Brennkraftmaschine 27 emittierten Abgases wieder der Brennkraftmaschine 27 zugeführt wird. Zudem sind in dieser sechsten Ausführungsform die Abgasstrangteile 35, 36 in der Abgasrückführung 81 angeordnet. Die Abgasstrangteile 35, 36 sind dabei derart ausgebildet, dass ihre Funktionsweise identisch wie bei den in den Fig. 1 bis 9 gezeigten Ausführungsformen ist. Ansonsten entspricht der Aufbau der in Fig. 10 gezeigten sechsten Ausführungsform dem Aufbau der zweiten Ausführungsform des gemäß Fig. 6.

### Bezugszeichenliste

- 1: Schiff
- 3: Gewässer
- 5: Position
- 7: Fahrtrichtung
- 9: Küste
- 11: ECA
- 13: Begrenzung
- 15: Antriebseinrichtung
- 17: Abgasnachbehandlungssystem
- 19: Abgasturbolader
- 21: Verdichter
- 23: Ansaugtrakt
- 25: Verbrennungsluft
- 27: Brennkraftmaschine
- 29: Turbine
- 31: Abgasstrang
- 32: Hochdruckbereich
- 33: Mündungsöffnung
- 34: Niederdruckbereich
- 35: Abgasstrangteil
- 36: Abgasstrangteil
- 37: Verbindungsbereich
- 38: Abgas
- 39: Speichereinrichtung
- 41: Abzug-Einrichtung
- 43: Durchgangsventil
- 45: Mehrwege-Ventil
- 47: Verbindungselement
- 49: Reaktor-Einrichtung
- 51: erstes Rohrelement
- 53: zweites Rohrelement
- 54: Niederdruckbereich
- 55: Fördereinrichtung
- 57: Bypass-Einrichtung
- 59: Durchgangsventil
- 60: Mess- und/oder Steuereinrichtung
- 61: unschädliche Stoffe
- 62: Mündungsöffnung
- 63: Regel- und/oder Steuereinrichtung
- 65: Zuführ-Einrichtung
- 67: Speicher-Behälter
- 70: Rohrelement
- 71: Bypass-Einrichtung
- 72: SCR-Katalysator
- 73: Fördereinrichtung
- 74: Rohrelement
- 75: Zuführbereich
- 77: Rohrelement
- 78: Zuführbereich
- 79: Rohrelement
- 80: Fördereinrichtung
- 81: Abgasrückführung

## Patentansprüche

1. Abgasnachbehandlungssystem für ein mit einer Brennkraftmaschine betriebenes Fahrzeug, insbesondere für ein Wasserfahrzeug, mit wenigstens einer in einem Abgasstrang (31) angeordneten Turbine (29) eines Abgasturboladers (19), wobei der Abgasstrang (31), in Abgas-Strömungsrichtung gesehen, stromauf der Turbine (29) als Hochdruckbereich (32) und stromab der Turbine (29) als gegenüber dem Hochdruckbereich (32) einen niedrigeren Druck aufweisender Niederdruckbereich (34) ausgebildet ist, und mit wenigstens einer Speichereinrichtung (39), mittels der zumindest ein Teil der in dem Abgas (38) enthaltenen Schwefel-Schadstoffe zumindest für einen definierten Zeitraum speicherbar und/oder zwischenspeicherbar ist, **dadurch gekennzeichnet, dass** zur Speicherung und/oder Zwischenspeicherung der Schwefel-Schadstoffe in dem Hochdruckbereich (32) die wenigstens eine Speichereinrichtung (39) stromauf der wenigstens einen Turbine (29) in dem Abgasstrang (31) angeordnet ist.

2. Abgasnachbehandlungssystem nach Anspruch 1, **dadurch gekennzeichnet, dass** die Speichereinrichtung (39) als Sorptionselement ausgebildet ist, mittels dem die Schwefel-Schadstoffe sorbierbar sind, wobei bevorzugt vorgesehen ist, dass die als Sorptionselement ausgebildete Speichereinrichtung (39) aus einem Sorptionsmaterial, insbesondere aus Zeolith und/oder aus Kalzium und/oder aus Barium, hergestellt ist oder mit einem Sorptionsmaterial beschichtet ist.

3. Abgasnachbehandlungssystem nach Anspruch 1 oder 2, **dadurch gekennzeichnet, dass** eine Zuführ-Einrichtung (65) vorgesehen ist, mittels der dem Abgas (38) stromauf der wenigstens einen Speichereinrichtung (39) ein in einem Speicher-Behälter (67) gespeichertes Reaktionsmittel zuführbar ist, mittels dem die in dem Abgas (38) enthaltenen Schwefel-Schadstoffe in Feststoffe, insbesondere in zersetzbare Salze, umwandelbar sind, und dass die Speichereinrichtung (39) als Filterelement ausgebildet ist, mittels dem die in Feststoffe umgewandelten Schwefel-Schadstoffe aus dem Abgasstrom filterbar und speicherbar sind.

4. Abgasnachbehandlungssystem nach Anspruch 3, **dadurch gekennzeichnet, dass** das Reaktionsmittel Ammoniak oder eine Vorstufe von Ammoniak, insbesondere eine wässrige Harnstofflösung, ist, wobei bevorzugt vorgesehen ist, dass in dem Abgasstrang (31) wenigstens ein SCR-Katalysator (39, 72) angeordnet ist, dem das derart ausgebildete Reaktionsmittel mit einer Zuführ-Einrichtung (65) ebenfalls zuführbar ist.

5. Abgasnachbehandlungssystem nach Anspruch 4, **dadurch gekennzeichnet, dass** die wenigstens eine Speichereinrichtung (39) als SCR-Katalysator ausgebildet ist.

6. Abgasnachbehandlungssystem nach Anspruch 4 oder 5, **dadurch gekennzeichnet, dass** der wenigstens eine SCR-Katalysator (72) stromab der Speichereinrichtung (39) in dem Abgasstrang (31) angeordnet ist, wobei bevorzugt vorgesehen ist, dass ein einziger, insbesondere stromauf der Turbine (29) und/oder der Speichereinrichtung (39) in dem Abgasstrang (31) angeordneter, Zuführbereich (75) zur Zuführung des Reaktionsmittels sowohl für die wenigstens eine Speichereinrichtung (39) und den SCR-Katalysator (72) in das Abgas (38) vorgesehen ist.

7. Abgasnachbehandlungssystem nach einem der vorhergehenden Ansprüche, **dadurch gekennzeichnet, dass** die Speichereinrichtung (39) in einer Abgasrückführung (81) des Abgasstrangs (31) angeordnet ist, mittels der das von der Brennkraftmaschine (29) emittierte Abgas (38) wieder der Brennkraftmaschine (29) zuführbar ist, und/oder dass die Speichereinrichtung (39) stromauf der Abgasrückführung (81) in dem Abgasstrang (31) angeordnet ist.

8. Abgasnachbehandlungssystem nach einem der vorhergehenden Ansprüche, **dadurch gekennzeichnet, dass** eine Abzug-Einrichtung (41) vorgesehen ist, mittels der die gespeicherten Schwefel-Schadstoffe aus dem Abgasstrang (31) abziehbar und/oder entfernbar sind, wobei die abgezogenen und/oder entfernten Schwefel-Schadstoffe einer Reaktor-Einrichtung (49) zuführbar sind, in der die Schwefel-Schadstoffe zu definierten, insbesondere unschädlichen, Stoffen umwandelbar sind.

9. Abgasnachbehandlungssystem nach Anspruch 8, **dadurch gekennzeichnet, dass** der Abgasstrang (31) zwei parallel vom Abgas durchströmte Abgasstrangteile (35, 36) aufweist, wobei in jedem dieser Abgasstrangteile (35, 36) wenigstens eine Speichereinrichtung (39) angeordnet ist, und dass die Abzug-Einrichtung (41) zur strömungstechnischen Entkopplung der Abgasstrangteile (35, 36) von dem Abgasstrom (31) eine Entkopplungs-Ventileinrichtung (43, 45) aufweist, die in einer ersten Ventilstellung keinen der beiden Abgasstrangteile (35, 36) entkoppelt, in einer zweiten Ventilstellung einen ersten der beiden Abgasstrangteile (35) entkoppelt und in einer dritten Ventilstellung einen zweiten der beiden Abgasstrangteile (36) entkoppelt.

10. Abgasnachbehandlungssystem nach Anspruch 9, **dadurch gekennzeichnet, dass** die Abzug-Einrichtung (41) wenigstens eine Entlastungs-Ventileinrichtung (45) aufweist, mittels der die Abgasstrangteile (35, 36) druckentlastbar sind, wobei die eine Entlastungs-Ventileinrichtung (45) einer ersten Ventilstellung keinen der beiden Abgasstrangteile (35, 36) druckentlastet, in einer zweiten Ventilstellung den ersten der beiden Abgasstrangteile (35) druckentlastet und in einer dritten Ventilstellung den zweiten der beiden Abgasstrangteile (36) druckentlastet.

11. Abgasnachbehandlungssystem nach Anspruch 10, **dadurch gekennzeichnet, dass** die Abzug-Einrichtung (41) wenigstens ein Verbindungselement (47) aufweist, mittels dem die Abgasstrangteile (35, 36) stromauf der Speichereinrichtung (39) strömungstechnisch mit der Reaktor-Einrichtung (49) verbindbar sind, und dass dem Verbindungselement (47) eine Verbindungs-Ventileinrichtung (45) zugeordnet ist, die in einer ersten Ventilstellung den Abgasstrom durch das Verbindungselement (47) sperrt, in einer zweiten Ventilstellung den Abgasstrom von dem ersten der beiden Abgasstrangteile (35) hin zu der Reaktor-Einrichtung (49) freigibt und in einer dritten Ventilstellung den Abgasstrom von dem zweiten der beiden Abgasstrangteile (36) hin zu der Reaktor-Einrichtung (49) freigibt.

12. Abgasnachbehandlungssystem nach einem der Ansprüche 10 oder 11, **dadurch gekennzeichnet, dass** die Abzug-Einrichtung (41) eine Bypass-Einrichtung (57) aufweist, mittels der die Abgasstrangteile (35, 36) stromab der Speichereirichtungen (39) und stromauf eines Verbindungsbereichs (37) der Abgasstrangteile (35, 36) strömungstechnisch miteinander verbindbar sind, und dass der Bypass-Einrichtung (57) eine Bypass-Ventileinrichtung (59) zugeordnet ist, die in einer ersten Ventilstellung den Abgasstrom durch die Bypass-Einrichtung (57) sperrt und in einer zweiten Ventilstellung den Abgasstrom durch die Bypass-Einrichtung (57) wenigstens teilweise freigibt.

13. Abgasnachbehandlungssystem nach Anspruch 11 oder 12, **dadurch gekennzeichnet, dass** die Abzug-Einrichtung (41) wenigstens eine Fördereinrichtung (55), insbesondere eine Pumpe, aufweist, mittels der das Abgas über das wenigstens eine Verbindungselement (47) von den Abgasstrangteilen (35, 36) zu der Reaktor-Einrichtung (49) förderbar ist.

14. Abgasnachbehandlungssystem nach einem der Ansprüche 8 bis 13, **dadurch gekennzeichnet, dass** die Reaktor-Einrichtung (49) zur Umwandlung der Schwefel-Schadstoffe einen Schadstoff-Wäscher aufweist, und/oder dass die Reaktor-Einrichtung (49) zur Umwandlung der Schwefel-Schadstoffe ein Festbett-Reaktionselement aufweist, und/oder dass die Reaktor-Einrichtung zur Umwandlung der Schwefel-Schadstoffe eine Kühleinrichtung und eine Kondensations-Einrichtung zur Kühlung und Kondensation der Schwefel-Schadstoffe aufweist.

15. Abgasnachbehandlungssystem nach einem der Ansprüche 3 bis 7 und einem der Ansprüche 8 bis 13, **dadurch gekennzeichnet, dass** eine Bypass-Einrichtung (71) vorgesehen ist, mittels der das von den Schwefel-Schadstoffen getrennte, aus dem Abgasstrang (31) entfernte Reaktionsmittel dem Abgas (38) stromauf der wenigstens einen Speichereinrichtung (39) wieder zuführbar ist.

16. Abgasnachbehandlungssystem nach einem der vorhergehenden Ansprüche, **dadurch gekennzeichnet, dass** eine Mess- und/oder Steuereinrichtung (60) vorgesehen ist, mittels der die in der wenigstens einen Speichereinrichtung (39) gespeicherte Menge an Schwefel-Schadstoffen ermittelbar ist, wobei bevorzugt vorgesehen ist, dass die Mess- und/oder Steuereinrichtung (60) zur Ermittlung der in der Speichereinrichtung (39) gespeicherten Menge an Schwefel-Schadstoffen eine Sensorik und/oder ein Simulationsmodell aufweist.

17. Verfahren zum Betreiben eines Abgasnachbehandlungssystems für ein mit einer Brennkraftmaschine betriebenes Fahrzeug, insbesondere für ein Wasserfahrzeug und/oder zum Betreiben eines Abgasnachbehandlungssystems nach einem der vorhergehenden Ansprüche, wobei das Abgasnachbehandlungssystem (17) wenigstens eine in einem Abgasstrang (31) angeordnete Turbine (29) eines Abgasturboladers (19) und wenigstens eine Speichereinrichtung (39) aufweist, wobei der Abgasstrang (31), in Abgas-Strömungsrichtung gesehen, stromauf der Turbine (29) als Hochdruckbereich (32) und stromab der Turbine (29) als gegenüber dem Hochdruckbereich (32) einen niedrigeren Druck aufweisender Niederdruckbereich (34) ausgebildet ist, und wobei mittels der Speichereinrichtung (39) zumindest ein Teil der in dem Abgas (38) enthaltenen Schwefel-Schadstoffe zumindest für einen definierten Zeitraum gespeichert und/oder zwischengespeichert wird, **dadurch gekennzeichnet, dass** die wenigstens eine Speichereinrichtung (39) stromauf der wenigstens einen Turbine (29) in dem Abgasstrang (31) angeordnet ist, so dass die Schwefel-Schadstoffe in dem Hochdruckbereich (32) des Abgasstrangs (31) gespeichert und/oder zwischengespeichert werden.

18. Verfahren nach Anspruch 17, **dadurch gekennzeichnet, dass** eine Abzug-Einrichtung (41) vorgesehen ist, mittels der die gespeicherten Schwefel-Schadstoffe aus dem Abgasstrang (31) abgezogen und/oder entfernt werden, wobei die abgezogenen und/oder entfernten Schwefel-Schadstoffe einer Reaktions-Einrichtung (49) zugeführt werden, in der die Schwefel-Schadstoffe zu definierten, insbesondere unschädlichen, Stoffen umgewandelt werden.

19. Verfahren nach Anspruch 18, **dadurch gekennzeichnet, dass** der Abgasstrang (31) zwei parallel vom Abgas (38) durchströmte Abgasstrangteile (35, 36) aufweist, wobei in jedem dieser Abgasstrangteile (31) wenigstens eine Speichereinrichtung (39) angeordnet ist, und dass die Abzug-Einrichtung (41) zur strömungstechnischen Entkopplung der Abgasstrangteile (35, 36) von dem Abgasstrom eine Entkopplungs-Ventileinrichtung (43, 45) aufweist, die in einer ersten Ventilstellung keinen der beiden Abgasstrangteile (35, 36) entkoppelt, in einer zweiten Ventilstellung einen ersten der beiden Abgasstrangteile (35) entkoppelt und in einer dritten Ventilstellung einen zweiten der beiden Abgasstrangteile (36) entkoppelt,
dass die Abzug-Einrichtung (41) wenigstens eine Entlastungs-Ventileinrichtung (45) aufweist, mittels der die Abgasstrangteile (35, 36) druckentlastbar sind, wobei die eine Entlastungs-Ventileinrichtung (45) einer ersten Ventilstellung keinen der beiden Abgasstrangteile (35, 36) druckentlastet, in einer zweiten Ventilstellung den ersten der beiden Abgasstrangteile (35) druckentlastet und in einer dritten Ventilstellung den zweiten der beiden Abgasstrangteile (36) druckentlastet,
dass die Abzug-Einrichtung (41) wenigstens ein Verbindungselement (47) aufweist, mittels dem die Abgasstrangteile (35, 36) stromauf der Speichereinrichtung (39) strömungstechnisch mit der Reaktor-Einrichtung (49) verbindbar sind, und dass dem Verbindungselement (47) eine Verbindungs-Ventileinrichtung (45) zugeordnet ist, die in einer ersten Ventilstellung den Abgasstrom durch das Verbindungselement (47) sperrt, in einer zweiten Ventilstellung den Abgasstrom von dem ersten der beiden Abgasstrangteile (35) hin zu der Reaktor-Einrichtung (49) freigibt und in einer dritten Ventilstellung den Abgasstrom von dem zweiten der beiden Abgasstrangteile (36) hin zu der Reaktor-Einrichtung (49) freigibt,
dass in einer Grundstellung die Entkopplungs-Ventileinrichtung (43, 45), die Entlastungs-Ventileinrichtung (45) und die Verbindungs-Ventileinrichtung (45) in ihren ersten Ventilstellungen sind,
und dass zur Regeneration der Speichereinrichtung (39) eines der beiden Abgasstrangteile (35, 36) die Entkopplungs-Ventileinrichtung (43, 45), die Entlastungs-Ventileinrichtung (45) und die Verbindungs-Ventileinrichtung (45) mittels einer Regel- und/oder Steuereinrichtung (63) derart gesteuert werden, dass der Abgasstrangteil (35, 36) zunächst mittels der Entkopplungs-Ventileinrichtung (43, 45) von dem Abgasstrom entkoppelt wird, dass der Abgasstrangteil (35, 36) anschließend mittels der Entlastungs-Ventileinrichtung (45) druckentlastet wird, und dass schließlich mittels der Verbindungs-Ventileinrichtung (45) der Abgasstrom von dem Abgasstrangteil (35, 36) hin zu der Reaktor-Einrichtung (49) freigegeben wird.

20. Verfahren nach Anspruch 19, **dadurch gekennzeichnet, dass** die Abzug-Einrichtung (41) eine Bypass-Einrichtung (57) aufweist, mittels der die Abgasstrangteile (35, 36) stromab der Speichereinrichtungen (39) und stromauf eines Verbindungsbereichs (37) der Abgasstrangteile (35, 36) strömungstechnisch miteinander verbindbar sind, und dass der Bypass-Einrichtung (57) eine Bypass-Ventileinrichtung (59) zugeordnet ist, die in einer ersten Ventilstellung den Abgasstrom durch die Bypass-Einrichtung (57) sperrt und in einer zweiten Ventilstellung den Abgasstrom durch die Bypass-Einrichtung (57) wenigstens teilweise freigibt,
dass in der Grundstellung die Bypass-Ventileinrichtung (59) in ihrer ersten Ventilstellung ist,
und dass zur Regeneration der Speichereinrichtung (39) des Abgasstrangteils (35, 36) die Bypass-Ventileinrichtung (59) mittels der Regel- und/oder Steuereinrichtung (63) derart gesteuert wird, dass nach dem Entkoppeln des Abgasstrangteils (35, 36) mittels der Bypass-Ventileinrichtung (59) der Abgasstrom durch die Bypass-Einrichtung (57) wenigstens teilweise freigegeben wird.

21. Fahrzeug, insbesondere Wasserfahrzeug, mit einem Abgasnachbehandlungssystem nach einem der Ansprüche 1 bis 16 und/oder mit Mitteln zur Durchführung eines Verfahrens nach einem der Ansprüche 17 bis 20.

## Claims

1. An exhaust gas aftertreatment system for a vehicle operated by means of a combustion engine, in particular for a watercraft, having at least one turbine (29), arranged in an exhaust line (31), of an exhaust turbocharger (19), wherein the exhaust line (31) is designed as a high-pressure region (32) upstream of the turbine (29) and as a low-pressure region (34) downstream of the turbine (29), as seen in the direction of the exhaust gas flow, said low-pressure region being at a lower pressure than the high-pressure region (32), and having at least one storage device (39), by means of which at least some of the sulphur pollutants contained in the exhaust gas (38) can be stored and/or put into intermediate storage, at least for a defined period of time, **characterized in that**, for storing and/or intermediately storing the sulphur pollutants in the high-pressure region (32), the at least one storage device (39) is arranged in the exhaust line (31) upstream of the at least one turbine (29).

2. The exhaust gas aftertreatment system according to Claim 1, **characterized in that** the storage device (39) is designed as a sorption element, by means of which the sulphur pollutants can be sorbed, wherein provision is preferably made for the storage device (39) designed as a sorption element to be produced from a sorption material, in particular from a zeolite and/or from calcium and/or from barium, or to be coated with a sorption material.

3. The exhaust gas aftertreatment system according to Claim 1 or 2, **characterized in that** a feed device (65) is provided, by means of which the exhaust gas (38) upstream of the at least one storage device (39) can be supplied with a reagent stored in a storage container (67), by means of which the sulphur pollutants contained in the exhaust gas (38) can be converted into solids, in particular into decomposable salts, and **in that** the storage device (39) is designed as a filter element, by means of which the sulphur pollutants converted into solids can be filtered out of the exhaust gas flow and stored.

4. The exhaust gas aftertreatment system according to Claim 3, **characterized in that** the reagent is ammonia or a precursor of ammonia, in particular an aqueous urea solution, wherein provision is preferably made for at least one SCR catalyst (39, 72), which can likewise be fed by means of a feed device (65) with the reagent formed in this way, to be arranged in the exhaust line (31).

5. The exhaust gas aftertreatment system according to Claim 4, **characterized in that** the at least one storage device (39) is designed as an SCR catalyst.

6. The exhaust gas aftertreatment system according to Claim 4 or 5, **characterized in that** the at least one SCR catalyst (72) is arranged in the exhaust line (31) downstream of the storage device (39), wherein provision is preferably made to provide a single feed region (75) for feeding the reagent both for the at least one storage device (39) and the SCR catalyst (72) into the exhaust gas (38), in particular a feed region (75) arranged in the exhaust line (31) upstream of the turbine (29) and/or of the storage device (39).

7. The exhaust gas aftertreatment system according to one of the preceding claims, **characterized in that** the storage device (39) is arranged in an exhaust gas recirculation system (81) of the exhaust line (31), by means of which the exhaust gas (38) emitted by the combustion engine (29) can be fed back to the combustion engine (29), and/or **in that** the storage device (39) is arranged in the exhaust line (31) upstream of the exhaust gas recirculation system (81).

8. The exhaust gas aftertreatment system according to one of the preceding claims, **characterized in that** an extraction device (41) is provided, by means of which the stored sulphur pollutants can be extracted and/or removed from the exhaust line (31), wherein the extracted and/or removed sulphur pollutants can be fed to a reactor device (49), in which the sulphur pollutants can be converted into defined substances, in particular harmless substances.

9. The exhaust gas aftertreatment system according to Claim 8, **characterized in that** the exhaust line (31) has two exhaust line parts (35, 36), through which the exhaust gas flows in parallel, wherein at least one storage device (39) is arranged in each of said exhaust line parts (35, 36), and **in that**, for fluidic decoupling of the exhaust line parts (35, 36) from the exhaust gas flow (31), the extraction device (41) has a decoupling valve device (43, 45), which decouples neither of the two exhaust line parts (35, 36) in a first valve position, decouples a first of the two exhaust line parts (35) in a second valve position, and decouples a second of the two exhaust line parts (36) in a third valve position.

10. The exhaust gas aftertreatment system according to Claim 9, **characterized in that** the extraction device (41) has at least one relief valve device (45), by means of which the exhaust line parts (35, 36) can be relieved of pressure, wherein one relief valve device (45) relieves neither of the two exhaust line parts (35, 36) in a first valve position, relieves the first of the two exhaust line parts (35) in a second valve position, and relieves the second of the two exhaust line parts (36) in a third valve position.

11. The exhaust gas aftertreatment system according to Claim 10, **characterized in that** the extraction device (41) has at least one connecting element (47), by means of which the exhaust line parts (35, 36) can be fluidically connected to the reactor device (49) upstream of the storage device (39), and **in that** the connecting element (47) is assigned a connecting valve device (45), which shuts off the exhaust gas flow through the connecting element (47) in a first valve position, enables the exhaust gas flow from the first of the two exhaust line parts (35) towards the reactor device (49) in a second valve position, and enables the exhaust gas flow from the second of the two exhaust line parts (36) towards the reactor device (49) in a third valve position.

12. The exhaust gas aftertreatment system according to either of Claims 10 or 11, **characterized in that** the extraction device (41) has a bypass device (57), by means of which the exhaust line parts (35, 36) can be fluidically connected to one another downstream of the storage devices (39) and upstream of a connecting region (37) of the exhaust line parts (35, 36), and **in that** the bypass device (57) is assigned a bypass valve device (59), which shuts off the exhaust gas flow through the bypass device (57) in a first valve position and at least partially enables the exhaust gas flow through the bypass device (57) in a second valve position.

13. The exhaust gas aftertreatment system according to Claim 11 or 12, **characterized in that** the extraction device (41) has at least one delivery device (55), in particular a pump, by means of which the exhaust gas can be delivered from the exhaust line parts (35, 36) to the reactor device (49) via the at least one connecting element (47).

14. The exhaust gas aftertreatment system according to one of Claims 8 to 13, **characterized in that** the reactor device (49) for converting the sulphur pollutants has a pollutant scrubber, and/or **in that** the reactor device (49) for converting the sulphur pollutants has a fixed bed reaction element, and/or **in that** the reactor device for converting the sulphur pollutants has a cooling device and a condensation device for cooling and condensing the sulphur pollutants.

15. The exhaust gas aftertreatment system according to one of Claims 3 to 7 and one of Claims 8 to 13, **characterized in that** a bypass device (71) is provided, by means of which the reagent separated from the sulphur pollutants and removed from the exhaust line (31) can be fed back to the exhaust gas (38) upstream of the at least one storage device (39).

16. The exhaust gas aftertreatment system according to one of the preceding claims, **characterized in that** a measurement and/or control device (60) is provided, by means of which the quantity of sulphur pollutants stored in the at least one storage device (39) can be determined, wherein provision is preferably made for the measurement and/or control device (60) for determining the quantity of sulphur pollutants stored in the storage device (39) to have a sensor system and/or a simulation model.

17. A method for operating an exhaust gas aftertreatment system for a vehicle operated by means of a combustion engine, in particular for a watercraft, and/or for operating an exhaust gas aftertreatment system according to one of the preceding claims, wherein the exhaust gas aftertreatment system (17) has at least one turbine (29), arranged in an exhaust line (31), of an exhaust turbocharger (19) and at least one storage device (39), wherein the exhaust line (31) is designed as a high-pressure region (32) upstream of the turbine (29) and as a low-pressure region (34) downstream of the turbine (29), as seen in the direction of the exhaust gas flow, said low-pressure region being at a lower pressure than the high-pressure region (32), and wherein at least some of the sulphur pollutants contained in the exhaust gas (38) can be stored and/or put into intermediate storage, at least for a defined period of time, by means of the storage device (39), **characterized in that** the at least one storage device (39) is arranged in the exhaust line (31) upstream of the at least one turbine (29), with the result that the sulphur pollutants are stored and/or put into intermediate storage in the high-pressure region (32) of the exhaust line (31).

18. The method according to Claim 17, **characterized in that** an extraction device (41) is provided, by means of which the stored sulphur pollutants are extracted and/or removed from the exhaust line (31), wherein the extracted and/or removed sulphur pollutants are fed to a reactor device (49), in which the sulphur pollutants are converted into defined substances, in particular harmless substances.

19. The method according to Claim 18, **characterized in that** the exhaust line (31) has two exhaust line parts (35, 36), through which the exhaust gas (38) flows in parallel, wherein at least one storage device (39) is arranged in each of said exhaust line parts (31), and **in that**, for fluidic decoupling of the exhaust line parts (35, 36) from the exhaust gas flow, the extraction device (41) has a decoupling valve device (43, 45), which decouples neither of the two exhaust line parts (35, 36) in a first valve position, decouples a first of the two exhaust line parts (35) in a second valve position, and decouples a second of the two exhaust line parts (36) in a third valve position,
**in that** the extraction device (41) has at least one relief valve device (45), by means of which the exhaust line parts (35, 36) can be relieved of pressure, wherein one relief valve device (45) relieves neither of the two exhaust line parts (35, 36) in a first valve position, relieves the first of the two exhaust line parts (35) in a second valve position, and relieves the second of the two exhaust line parts (36) in a third valve position,
**in that** the extraction device (41) has at least one connecting element (47), by means of which the exhaust line parts (35, 36) can be fluidically connected to the reactor device (49) upstream of the storage device (39), and **in that** the connecting element (47) is assigned a connecting valve device (45), which shuts off the exhaust gas flow through the connecting element (47) in a first valve position, enables the exhaust gas flow from the first of the two exhaust line parts (35) towards the reactor device (49) in a second valve position, and enables the exhaust gas flow from the second of the two exhaust line parts (36) towards the reactor device (49) in a third valve position,
**in that** the decoupling valve device (43, 45), the relief valve device (45) and the connecting valve device (45) are in their first valve positions in an initial position,
and **in that**, to regenerate the storage device (39) of one of the two exhaust line parts (35, 36), the decoupling valve device (43, 45), the relief valve device (45) and the connecting valve device (45) are controlled in such a way by means of a closed-loop and/or open-loop control device (63) that the exhaust line part (35, 36) is initially decoupled from the exhaust gas flow by means of the decoupling valve device (43, 45), that the exhaust line part (35, 36) is then relieved of pressure by means of the relief valve device (45), and that finally the exhaust gas flow from the exhaust line part (35, 36) towards the reactor device (49) is enabled by means of the connecting valve device (45).

20. The method according to Claim 19, **characterized in that** the extraction device (41) has a bypass device (57), by means of which the exhaust line parts (35, 36) can be fluidically connected to one another downstream of the storage devices (39) and upstream of a connecting region (37) of the exhaust line parts (35, 36), and **in that** the bypass device (57) is assigned a bypass valve device (59), which shuts off the exhaust gas flow through the bypass device (57) in a first valve position and at least partially enables the exhaust gas flow through the bypass device (57) in a second valve position,
**in that** the bypass valve device (59) is in its first valve position in the initial position,
and **in that**, to regenerate the storage device (39) of the exhaust line part (35, 36), the bypass valve device (59) is controlled in such a way by means of the closed-loop and/or open-loop control device (63) that the exhaust gas flow through the bypass device (57) is at least partially enabled by means of the bypass valve device (59) after the decoupling of the exhaust line part (35, 36).

21. A vehicle, in particular a watercraft, having an exhaust gas aftertreatment system according to one of Claims 1 to 16 and/or having means for carrying out a method according to one of Claims 17 to 20.

## Revendications

1. Système de post-traitement de gaz d'échappement pour un véhicule équipé d'un moteur à combustion interne, notamment pour un bateau, comprenant au moins une turbine (29) d'un turbocompresseur à gaz d'échappement (19) agencée dans un circuit de gaz d'échappement (31), le circuit de gaz d'échappement (31) étant configuré, dans la direction d'écoulement du gaz d'échappement, en amont de la turbine (29) sous la forme d'un zone à pression élevée (32) et en aval de la turbine (29) sous la forme d'une zone à pression basse (34) présentant une pression plus basse que la zone à pression élevée (32), et comprenant au moins un dispositif de stockage (39), au moyen duquel au moins une partie des polluants à base de soufre contenus dans le gaz d'échappement (38) peuvent être stockés et/ou entreposés au moins pendant une durée définie, **caractérisé en ce que**, pour le stockage et/ou l'entreposage des polluants à base de soufre dans la zone à pression élevée (32), ledit au moins un dispositif de stockage (39) est agencé en amont de ladite au moins une turbine (29) dans le circuit de gaz d'échappement (31).

2. Système de post-traitement de gaz d'échappement selon la revendication 1, **caractérisé en ce que** le dispositif de stockage (39) est configuré sous la forme d'un élément de sorption, au moyen duquel les polluants à base de soufre peuvent être sorbés, le dispositif de stockage (39) configuré sous la forme d'un élément de sorption étant de préférence fabriqué à partir d'un matériau de sorption, notamment de zéolithe et/ou de calcium et/ou de baryum, ou revêtu avec un matériau de sorption.

3. Système de post-traitement de gaz d'échappement selon la revendication 1 ou 2, **caractérisé en ce qu'**un dispositif d'alimentation (65) est prévu, au moyen duquel un agent de réaction stocké dans un contenant de stockage (67) peut être introduit dans le gaz d'échappement (38) en amont dudit au moins un dispositif de stockage (39), au moyen duquel les polluants à base de soufre contenus dans le gaz d'échappement (38) peuvent être transformés en solides, notamment en sels décomposables, et **en ce que** le dispositif de stockage (39) est configuré sous la forme d'un élément filtrant, au moyen duquel les polluants à base de soufre transformés en solides peuvent être filtrés du courant de gaz d'échappement et stockés.

4. Système de post-traitement de gaz d'échappement selon la revendication 3, **caractérisé en ce que** l'agent de réaction est l'ammoniac ou un précurseur de l'ammoniac, notamment une solution aqueuse d'urée, au moins un catalyseur de SCR (39, 72) étant de préférence agencé dans le circuit de gaz d'échappement (31), dans lequel l'agent de réaction ainsi configuré peut également être introduit par un dispositif d'alimentation (65).

5. Système de post-traitement de gaz d'échappement selon la revendication 4, **caractérisé en ce que** ledit au moins un dispositif de stockage (39) est configuré sous la forme d'un catalyseur de SCR.

6. Système de post-traitement de gaz d'échappement selon la revendication 4 ou 5, **caractérisé en ce que** ledit au moins un catalyseur de SCR (72) est agencé en aval du dispositif de stockage (39) dans le circuit de gaz d'échappement (31), une zone d'alimentation (75) unique, notamment agencée en amont de la turbine (29) et/ou du dispositif de stockage (39) dans le circuit de gaz d'échappement (31) étant de préférence prévue pour l'alimentation de l'agent de réaction aussi bien pour ledit au moins un dispositif de stockage (39) que pour le catalyseur de SCR (72) dans le gaz d'échappement (38).

7. Système de post-traitement de gaz d'échappement selon l'une quelconque des revendications précédentes, **caractérisé en ce que** le dispositif de stockage (39) est agencé dans une conduite de recyclage de gaz d'échappement (81) du circuit de gaz d'échappement (31), au moyen de laquelle le gaz d'échappement (38) émis par le moteur à combustion interne (29) peut être réintroduit dans le moteur à combustion interne (29), et/ou **en ce que** le dispositif de stockage (39) est agencé en amont de la conduite de recyclage de gaz d'échappement (81) dans le circuit de gaz d'échappement (31).

8. Système de post-traitement de gaz d'échappement selon l'une quelconque des revendications précédentes, **caractérisé en ce qu'**un dispositif de soutirage (41) est prévu, au moyen duquel les polluants à base de soufre stockés peuvent être soutirés et/ou éliminés du circuit de gaz d'échappement (31), les polluants à base de soufre soutirés et/ou éliminés pouvant être introduits dans un dispositif de réacteur (49), dans lequel les polluants à base de soufre peuvent être transformés en substances définies, notamment non nocives.

9. Système de post-traitement de gaz d'échappement selon la revendication 8, **caractérisé en ce que** le circuit de gaz d'échappement (31) comprend deux parties de circuit de gaz d'échappement (35, 36) traversées en parallèle par le gaz d'échappement, au moins un dispositif de stockage (39) étant agencé dans chacune de ces parties de circuit de gaz d'échappement (35, 36), et **en ce que** le dispositif de soutirage (41) comprend un dispositif à vanne de découplage (43, 45) pour le découplage en termes d'écoulement des parties de circuit de gaz d'échappement (35, 36) du courant de gaz d'échappement (31), qui à une première position de vanne ne découple aucune des deux parties de circuit de gaz d'échappement (35, 36), à une deuxième position de vanne découple une première des deux parties de circuit de gaz d'échappement (35) et à une troisième position de vanne découple une deuxième des deux parties de circuit de gaz d'échappement (36).

10. Système de post-traitement de gaz d'échappement selon la revendication 9, **caractérisé en ce que** le dispositif de soutirage (41) comprend au moins un dispositif à vanne de déchargement (45), au moyen duquel les parties de circuit de gaz d'échappement (35, 36) peuvent être déchargées en pression, le dispositif à vanne de déchargement (45) à une première position de vanne ne déchargeant en pression aucune des deux parties de circuit de gaz d'échappement (35, 36), à une deuxième position de vanne déchargeant en pression la première des deux parties de circuit de gaz d'échappement (35) et à une troisième position de vanne déchargeant en pression la deuxième des deux parties de circuit de gaz d'échappement (36).

11. Système de post-traitement de gaz d'échappement selon la revendication 10, **caractérisé en ce que** le dispositif de soutirage (41) comprend au moins un élément de raccordement (47), au moyen duquel les parties de circuit de gaz d'échappement (35, 36) peuvent être raccordées en amont du dispositif de stockage (39) en termes d'écoulement avec le dispositif de réacteur (49), et **en ce qu'**un dispositif à vanne de raccordement (45) est attribué à l'élément de raccordement (47), qui à une première position de vanne bloque le courant de gaz d'échappement au travers de l'élément de raccordement (47), à une deuxième position de vanne laisse passer le courant de gaz d'échappement depuis la première des deux parties de circuit de gaz d'échappement (35) vers le dispositif de réacteur (49), et à une troisième position de vanne laisse passer le courant de gaz d'échappement depuis la deuxième des deux parties de circuit de gaz d'échappement (36) vers le dispositif de réacteur (49).

12. Système de post-traitement de gaz d'échappement selon l'une quelconque des revendications 10 ou 11, **caractérisé en ce que** le dispositif de soutirage (41) comprend un dispositif de dérivation (57), au moyen duquel les parties de circuit de gaz d'échappement (35, 36) en aval des dispositifs de stockage (39) et en amont d'une zone de raccordement (37) des parties de circuit de gaz d'échappement (35, 36) peuvent être raccordées l'une avec l'autre en termes d'écoulement, et **en ce qu'**un dispositif à vanne de dérivation (59) est attribué au dispositif de dérivation (57), qui à une première position de vanne bloque le courant de gaz d'échappement au travers du dispositif de dérivation (57), et à une deuxième position de vanne laisse passer au moins partiellement le courant de gaz d'échappement au travers du dispositif de dérivation (57).

13. Système de post-traitement de gaz d'échappement selon la revendication 11 ou 12, **caractérisé en ce que** le dispositif de soutirage (41) comprend au moins un dispositif de transport (55), notamment une pompe, au moyen duquel le gaz d'échappement peut être transporté par ledit au moins un élément de raccordement (47) depuis les parties de circuit de gaz d'échappement (35, 36) vers le dispositif de réacteur (49).

14. Système de post-traitement de gaz d'échappement selon l'une quelconque des revendications 8 à 13, **caractérisé en ce que** le dispositif de réacteur (49) pour la transformation des polluants à base de soufre comprend un épurateur de polluants et/ou **en ce que** le dispositif de réacteur (49) pour la transformation des polluants à base de soufre comprend un élément de réaction à lit fixe et/ou **en ce que** le dispositif de réacteur pour la transformation des polluants à base de soufre comprend un dispositif de refroidissement et un dispositif de condensation pour le refroidissement et la condensation des polluants à base de soufre.

15. Système de post-traitement de gaz d'échappement selon l'une quelconque des revendications 3 à 7 et selon l'une quelconque des revendications 8 à 13, **caractérisé en ce qu'**un dispositif de dérivation (71) est prévu, au moyen duquel l'agent de réaction séparé des polluants à base de soufre, éliminé du circuit de gaz d'échappement (31), peut être réintroduit dans le gaz d'échappement (38) en amont dudit au moins un dispositif de stockage (39).

16. Système de post-traitement de gaz d'échappement selon l'une quelconque des revendications précédentes, **caractérisé en ce qu'**un dispositif de mesure et/ou de commande (60) est prévu, au moyen duquel la quantité de polluants à base de soufre stockée dans ledit au moins un dispositif de stockage (39) peut être déterminée, le dispositif de mesure et/ou de commande (60) comprenant de préférence une analyse sensorielle et/ou un modèle de simulation pour déterminer la quantité de polluants à base de soufre stockée dans le dispositif de stockage (39).

17. Procédé d'exploitation d'un système de post-traitement de gaz d'échappement pour un véhicule équipé d'un moteur à combustion interne, notamment pour un bateau, et/ou d'exploitation d'un système de post-traitement de gaz d'échappement selon l'une quelconque des revendications précédentes, selon lequel le système de post-traitement de gaz d'échappement (17) comprend au moins une turbine (29) d'un turbocompresseur à gaz d'échappement (19) agencée dans un circuit de gaz d'échappement (31) et au moins un dispositif de stockage (39), le circuit de gaz d'échappement (31) étant configuré, dans la direction d'écoulement du gaz d'échappement, en amont de la turbine (29) sous la forme d'un zone à pression élevée (32) et en aval de la turbine (29) sous la forme d'une zone à pression basse (34) présentant une pression plus basse que la zone à pression élevée (32) et, au moyen du dispositif de stockage (39), au moins une partie des polluants à base de soufre contenus dans le gaz d'échappement (38) étant stockés et/ou entreposés au moins pendant une durée définie, **caractérisé en ce que** ledit au moins un dispositif de stockage (39) est agencé en amont de ladite au moins une turbine (29) dans le circuit de gaz d'échappement (31) pour le stockage et/ou l'entreposage des polluants à base de soufre dans la zone à pression élevée (32) du circuit de gaz d'échappement (31).

18. Procédé selon la revendication 17, **caractérisé en ce qu'**un dispositif de soutirage (41) est prévu, au moyen duquel les polluants à base de soufre stockés peuvent être soutirés et/ou éliminés du circuit de gaz d'échappement (31), les polluants à base de soufre soutirés et/ou éliminés étant introduits dans un dispositif de réaction (49), dans lequel les polluants à base de soufre sont transformés en substances définies, notamment non nocives.

19. Procédé selon la revendication 18, **caractérisé en ce que** le circuit de gaz d'échappement (31) comprend deux parties de circuit de gaz d'échappement (35, 36) traversées en parallèle par le gaz d'échappement (38), au moins un dispositif de stockage (39) étant agencé dans chacune de ces parties de circuit de gaz d'échappement (31), et **en ce que** le dispositif de soutirage (41) comprend un dispositif à vanne de découplage (43, 45) pour le découplage en termes d'écoulement des parties de circuit de gaz d'échappement (35, 36) du courant de gaz d'échappement, qui à une première position de vanne ne découple aucune des deux parties de circuit de gaz d'échappement (35, 36), à une deuxième position de vanne découple une première des deux parties de circuit de gaz d'échappement (35) et à une troisième position de vanne découple une deuxième des deux parties de circuit de gaz d'échappement (36),
**en ce que** le dispositif de soutirage (41) comprend un dispositif à vanne de déchargement (45), au moyen duquel les parties de circuit de gaz d'échappement (35, 36) peuvent être déchargées en pression, le dispositif à vanne de déchargement (45) à une première position de vanne ne déchargeant en pression aucune des deux parties de circuit de gaz d'échappement (35, 36), à une deuxième position de vanne déchargeant en pression la première des deux parties de circuit de gaz d'échappement (35) et à une troisième position de vanne déchargeant en pression la deuxième des deux parties de circuit de gaz d'échappement (36),
**en ce que** le dispositif de soutirage (41) comprend au moins un élément de raccordement (47), au moyen duquel les parties de circuit de gaz d'échappement (35, 36) peuvent être raccordées en amont du dispositif de stockage (39) en termes d'écoulement avec le dispositif de réacteur (49), et **en ce qu'**un dispositif à vanne de raccordement (45) est attribué à l'élément de raccordement (47), qui à une première position de vanne bloque le courant de gaz d'échappement au travers de l'élément de raccordement (47), à une deuxième position de vanne laisse passer le courant de gaz d'échappement depuis la première des deux parties de circuit de gaz d'échappement (35) vers le dispositif de réacteur (49), et à une troisième position de vanne laisse passer le courant de gaz d'échappement depuis la deuxième des deux parties de circuit de gaz d'échappement (36) vers le dispositif de réacteur (49),
**en ce qu'**à un état initial, le dispositif à vanne de découplage (43, 45), le dispositif à vanne de déchargement (45) et le dispositif à vanne de raccordement (45) sont en leur première position de vanne,
et **en ce que**, pour la régénération du dispositif de stockage (39) d'une des deux parties de circuit de gaz d'échappement (35, 36), le dispositif à vanne de découplage (43, 45), le dispositif à vanne de déchargement (45) et le dispositif à vanne de raccordement (45) sont commandés au moyen d'un dispositif de régulation et/ou de commande (63) de sorte que la partie de circuit de gaz d'échappement (35, 36) soit tout d'abord découplée du courant de gaz d'échappement au moyen du dispositif à vanne de découplage (43, 45), que la partie de circuit de gaz d'échappement (35, 36) soit ensuite déchargée en pression au moyen du dispositif à vanne de déchargement (45), et que le courant de gaz d'échappement soit enfin laissé passer depuis la partie de circuit de gaz d'échappement (35, 36) vers le dispositif de réacteur (49) au moyen du dispositif à vanne de raccordement (45).

20. Procédé selon la revendication 19, **caractérisé en ce que** le dispositif de soutirage (41) comprend un dispositif de dérivation (57), au moyen duquel les parties de circuit de gaz d'échappement (35, 36) en aval des dispositifs de stockage (39) et en amont d'une zone de raccordement (37) des parties de circuit de gaz d'échappement (35, 36) peuvent être raccordées l'une avec l'autre en termes d'écoulement, et **en ce qu'**un dispositif à vanne de dérivation (59) est attribué au dispositif de dérivation (57), qui à une première position de vanne bloque le courant de gaz d'échappement au travers du dispositif de dérivation (57), et à une deuxième position de vanne laisse passer au moins partiellement le courant de gaz d'échappement au travers du dispositif de dérivation (57),
**en ce qu'**à l'état initial, le dispositif à vanne de dérivation (59) est à sa première position de vanne,
et **en ce que**, pour la régénération du dispositif de stockage (39) de la partie de circuit de gaz d'échappement (35, 36), le dispositif à vanne de dérivation (59) est commandé au moyen du dispositif de régulation et/ou de commande (63) de sorte qu'après le découplage de la partie de circuit de gaz d'échappement (35, 36), le courant de gaz d'échappement soit laissé passer au moins partiellement au travers du dispositif de dérivation (57) au moyen du dispositif à vanne de dérivation (59).

21. Véhicule, notamment bateau, comprenant un système de post-traitement de gaz d'échappement selon l'une quelconque des revendications 1 à 16 et/ou comprenant des moyens pour la réalisation d'un procédé selon l'une quelconque des revendications 17 à 20.
